(19) Europäisches Patentamt
European Patent Office
Office européen des brevets

(11) EP 4 598 188 A1

(12) EUROPEAN PATENT APPLICATION
published in accordance with Art. 153(4) EPC

(43) Date of publication:
06.08.2025 Bulletin 2025/32

(21) Application number: 23873287.9

(22) Date of filing: 04.10.2023

(51) International Patent Classification (IPC):
H04W 72/04 (2023.01)     H04L 5/14 (2006.01)
H04L 5/00 (2006.01)       H04W 72/11 (2023.01)
H04W 72/23 (2023.01)      H04L 27/26 (2006.01)

(52) Cooperative Patent Classification (CPC):
H04L 5/00; H04L 5/14; H04L 27/26; H04W 72/04;
H04W 72/11; H04W 72/23

(86) International application number:
PCT/KR2023/015168

(87) International publication number:
WO 2024/072180 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 KR 20220124740
17.07.2023 KR 20230092665

(71) Applicant: LG Electronics Inc.
Yeongdeungpo-gu
Seoul 07336 (KR)

(72) Inventors:
• SONG, Minwoo
Seoul 06772 (KR)
• KO, Hyunsoo
Seoul 06772 (KR)
• YOU, Hyangsun
Seoul 06772 (KR)
• SHIM, Jaenam
Seoul 06772 (KR)

(74) Representative: Plasseraud IP
104 Rue de Richelieu
CS92104
75080 Paris Cedex 02 (FR)

(54) METHOD FOR PERFORMING COMMUNICATION IN WIRELESS COMMUNICATION SYSTEM AND DEVICE THEREFOR

(57) A terminal according to various embodiments may: receive TDD configuration information for configuring a downlink time duration and an uplink time duration within a time resource period; receive indication information specifying a first time duration associated with full duplex operation of a base station within the time resource period; and perform communication with the base station on the basis of the indication information and the TDD configuration information, wherein on the basis of the indication information indicating only one of a start symbol, a last symbol, and duration of the first time duration, the first time duration is specified by further considering the boundary of one time duration among the uplink time duration and the downlink time duration.

FIG. 10

(a)

(b)

## Description

### TECHNICAL FIELD

The present disclosure relates to a method of performing communication by a user equipment (UE) based on a time duration during which a full-duplex operation of a base station (BS) is performed in a wireless communication system, and to a device therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### DISCLOSURE

#### Technical Problem

An object of the present disclosure is to provide a more accurate and efficient method of transmitting and receiving a signal.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

#### Technical Solution

According to an aspect, a method of performing communication with a base station (BS) by a user equipment (UE) in a wireless communication system includes receiving time division duplexing (TDD) configuration information for configuring a downlink (DL) time duration and an uplink (UL) time duration within a time resource period, receiving indication information specifying a first time duration related to a full-duplex operation of the BS within the time resource period, and performing communication with the BS based on the indication information and the TDD configuration information, wherein, based on the indication information indicating only one of a start symbol, a last symbol, and a duration of the first time duration, the UE specifies the first time duration by further considering a boundary of one of the UL time duration and the DL time duration.

Based on the indication information indicating only a start symbol of the first time duration, the first time duration is specified as a time duration from the start symbol of the first time duration to a symbol immediately before a start symbol of the UL time duration.

Based on the indication information indicating only a last symbol of the first time duration, the first time duration is specified as a time duration from a start symbol of the DL time duration to the last symbol.

Based on the indication information indicating only the duration, a last symbol of the first time duration is determined as a symbol immediately before a start symbol of the UL time duration.

The first time duration is specified only within the DL time duration by the indication information.

The first UL time resource is a time resource that overlaps the DL time resource, and the second UL time resource is a time resource that does not overlap the DL time resource.

Based on a flexible time duration being further included in the time resource period, the indication information indicates one of symbols included in the flexible time duration as a start symbol of the first time duration or a last symbol of the first time duration.

A frequency band for the first time duration includes a first sub-band for the UL and a second sub-band for the DL that do not overlap each other.

A frequency band for the first time duration includes a first sub-band for the UL and a second sub-band for the DL that overlap each other.

The time resource period is divided into a first time duration in which a full-duplex operation of the BS is performed based on the indication information and a second time duration in which a half-duplex operation of the BS is performed, and the first time duration is configured with a different transmission power control parameter than the second time duration.

The indication information is received from the BS through radio resource control (RRC) signaling.

According to another aspect, a user equipment (UE) for performing communication with a base station (BS) in a wireless communication system includes a radio frequency (RF) transceiver, and a processor connected to the RF transceiver, wherein the processor controls the RF transceiver to receive time division duplexing (TDD) configuration information for configuring a downlink (DL) time duration and an uplink (UL) time duration within a time resource period, receive indication information specifying a first time duration related to a full-duplex operation of the BS within the time resource period, and perform communication with the BS based on the indication information and the TDD configuration information, and based on the indication information indicating only one of a start symbol, a last symbol, and a duration of the first time duration, the first time duration is specified by further considering a boundary of one of the UL time duration and the DL time duration.

According to another aspect, a method of performing communication with a user equipment (UE) by a base station (BS) in a wireless communication system includes transmitting time division duplexing (TDD) configuration information for configuring a downlink (DL) time duration and an uplink (UL) time duration within a time resource period, transmitting indication information specifying a first time duration related to a full-duplex operation of the BS within the time duration, and performing communication with the UE based on the indication information and the TDD configuration information, wherein, based on the indication information indicating only one of a start symbol, a last symbol, and a duration of the first time duration, the first time duration is specified by further considering a boundary of one of the UL time duration and the DL time duration.

## Advantageous Effects

According to an embodiment of the present disclosure, transmission and reception of a signal in a wireless communication system may be performed more accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 is a diagram illustrating physical channels and a signal transmission method using the physical channels, which may be used in the embodiment;
FIG. 6 illustrates a process in which a UE transmits ACK/NACK via PUSCH.
FIG. 7 illustrates an example of a CSI-related procedure.
FIG. 8 is a diagram for explaining a method of performing a full duplex operation in an NR system.
FIG. 9 and FIG. 10 are diagrams for explaining sub-band full duplex (SBFD) and single frequency full duplex (SFFD) operations.
FIG. 11 is a diagram for explaining a method of indicating an SBFD time duration within a time resource period.
FIG. 12 is a diagram for explaining a method of indicating an SBFD time duration by considering a DL time duration and/or an uplink (UL) time duration.
FIG. 13 and FIG. 14 are diagrams for explaining a method of configuring DL-SBFD-UL within a time resource period.
FIG. 15 is a diagram for explaining a method of configuring a DL time duration-UL time duration-SBFD interval within a time resource period.
FIG. 16 is a diagram illustrating a method of indicating an SBFD time duration within a time resource period including a flexible time duration.

FIGS. 17 and 18 are diagrams for explaining a method of configuring an SBFD time duration based on a boundary of a flexible interval.

FIGS. 19 and 20 are diagrams for explaining a method of configuring/indicating an SBFD time duration based on a boundary of a UL time duration.

FIG. 21 is a diagram for explaining a method for a UE to specify a first time duration within a time resource period based on indication information.

FIG. 22 is a diagram for explaining a method of transmitting indication information specifying a first time duration within a time resource period by a BS.

FIG. 23 illustrates a communication system applied to the present disclosure;

FIG. 24 illustrates wireless devices applicable to the present disclosure.

FIG. 25 illustrates another example of a wireless device to which the present disclosure is applied.

## DETAILED DESCRIPTION

A wireless communication system is a multiple access system that supports communication with multiple users by sharing available system resources (e.g., bandwidth, transmission power, etc.). Examples of multiple access systems include a CDMA (code division multiple access) system, an FDMA (frequency division multiple access) system, a TDMA (time division multiple access) system, an OFDMA (orthogonal frequency division multiple access) system, a SC-FDMA (single carrier frequency division multiple access) system, and an MC-FDMA (multi carrier frequency division multiple access) system.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

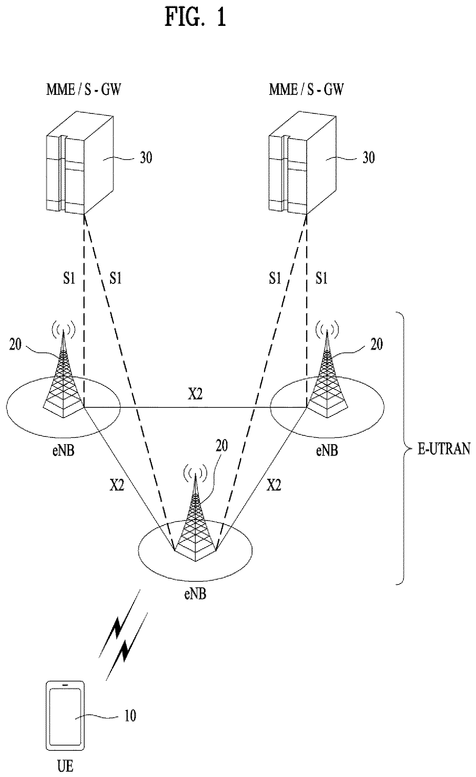

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

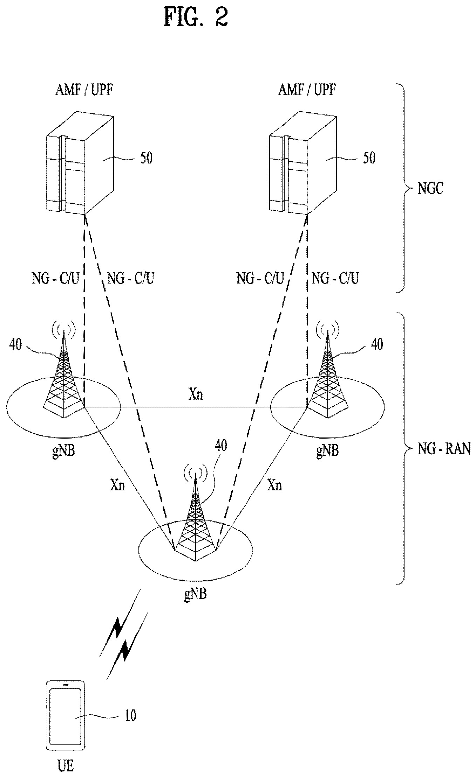

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

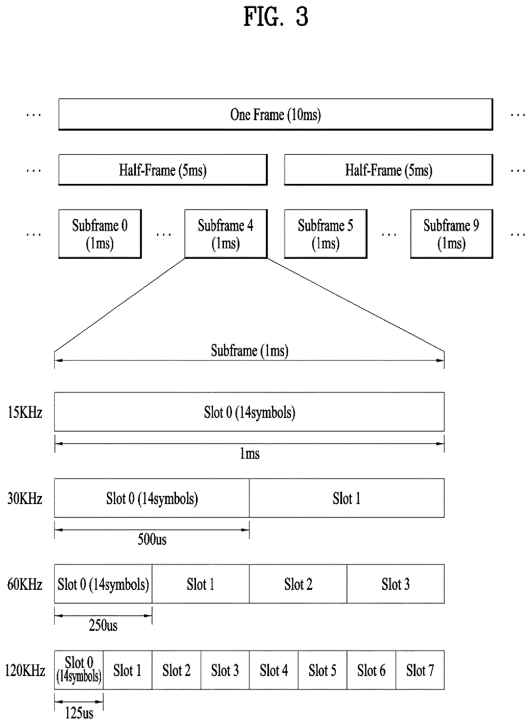

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{Frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

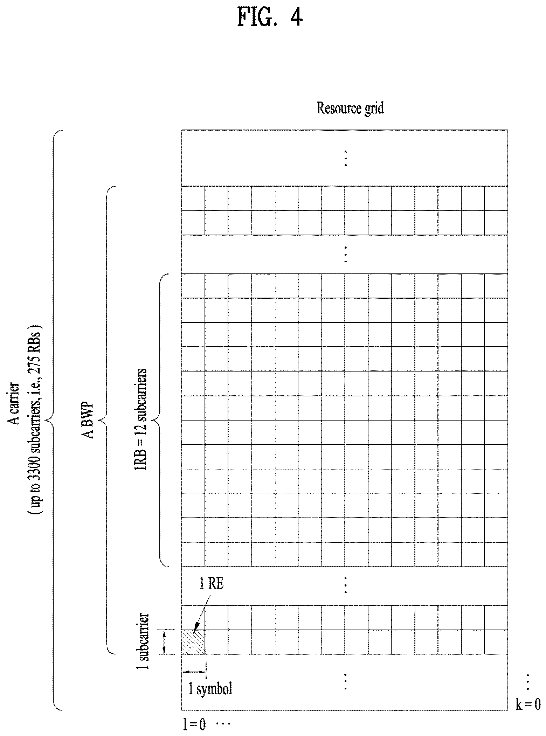

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signaling, etc.). The BS may instruct the UE to switch to another configured DL/UL BWP (through L1 signaling, MAC CE or RRC signaling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

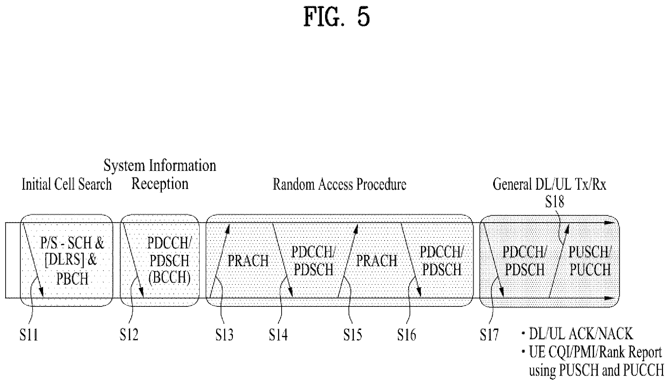

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

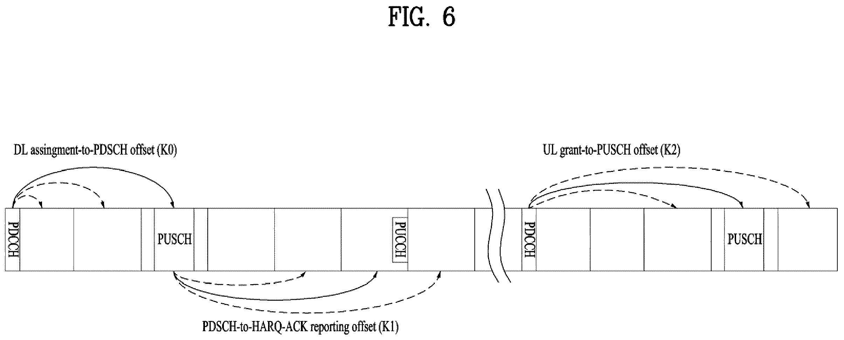

FIG. 6 illustrates an exemplary ACK/NACK transmission process

Referring to FIG. 6, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

Below, the PUSCH transmission process is described.

the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## CSI related operation

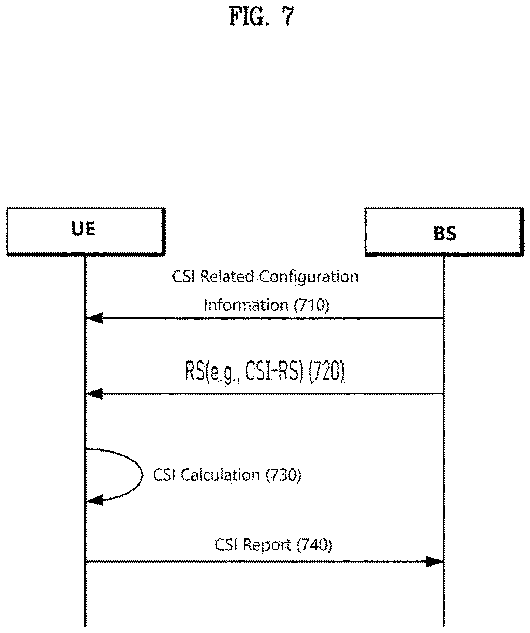

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

CSI codebooks defined in the NR standard (e.g., PMI codebook) may be broadly divided into Type I codebook and Type II codebook. The Type I codebook primarily targets single user (SU)-MIMO, supporting both high-order and low-order. The Type II codebook may mainly support MI-MIMO supporting up to 2 layers. Compared to Type I, the Type II codebook may provide more accurate CSI, but signaling overhead may increase correspondingly. The Enhanced Type II codebook is introduced to address the CSI overhead shortcomings of the existing Type II codebook by reducing the payload of the codebook by considering a correlation of the frequency axis.

CSI reporting via a PUSCH may be configured to Part 1 and Part 2. The Part 1 has a fixed payload size and is used to identify the number of bits of information in the Part 2. The Part 1 may be transmitted in its entirety before the Part 2.

- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes an indication of the number of non-zero WB amplitude coefficients per layer of RI (if reported), CQI, and Type II CSI. The Part 2 includes the PMI of Type II CSI.
- For Enhanced Type II CSI feedback, the Part 1 includes an indication of the total number of non-zero WB amplitude coefficients for all layers of RI (if reported), CQI, and Enhanced Type II CSI. The Part 2 includes the PMI of Enhanced Type II CSI.

If CSI reporting on PUSCH includes two parts and the CSI payload to be reported is less than a payload size provided by the PUSCH resources allocated for CSI reporting, the UE may partially omit Part 2 CSI.

Semi-persistent CSI reporting performed in PUCCH format 3 or 4 supports Type II CSI feedback, but supports only Part 1 of Type II CSI feedback.

**Quasi-co location (QCL)**

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

**Beam Management (BM)**

BM is a series of processes for acquiring and maintaining a set of BS (or transmission and reception point (TRP)) beams and/or UE beams available for DL and UL transmissions/receptions. BM may include the following processes and terminology.

Beam measurement: The BS or the UE measures the characteristics of a received beamformed signal.

Beam determination: The BS or the UE selects its Tx beam/reception (Rx) beam.

Beam sweeping: A spatial domain is covered by using Tx beams and/or Rx beams in a predetermined manner during a predetermined time duration.

Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

A DL BM process may include (1) transmission of beamformed DL RSs (e.g., CSI-RSs or SSBs) from a BS and (2) beam reporting from a UE.

Here, the beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

**Full duplex operation for NR**

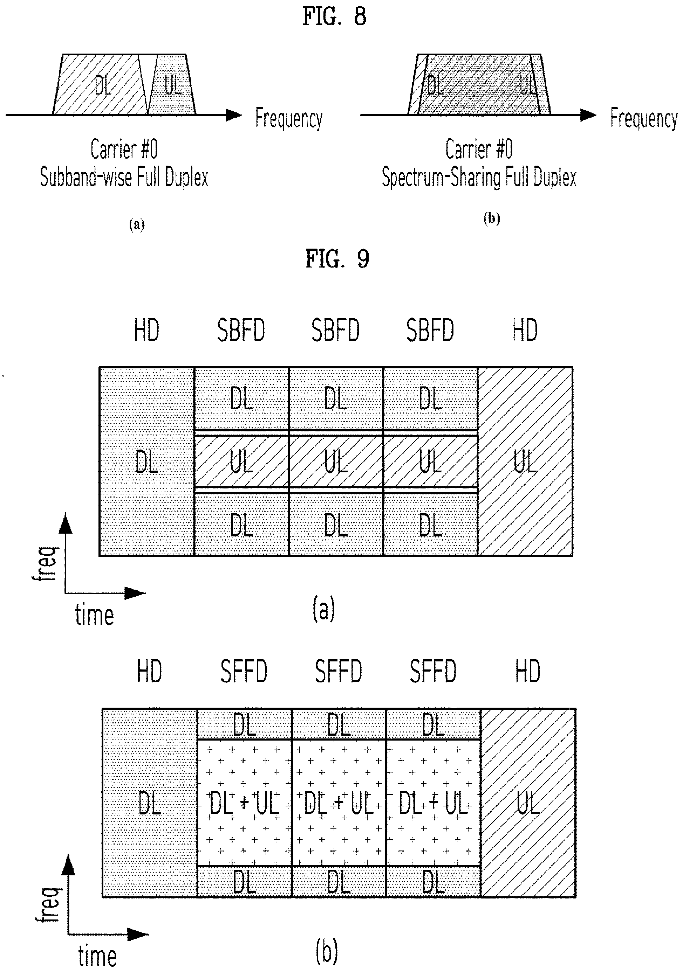

FIG. 8 is a diagram for explaining a method of performing a full duplex operation in an NR system.

In 5G, new types of services such as Extended reality (XR), AI-based services, and self-driving cars have been made. These services have the characteristics of dynamically changing traffic in both DL and UL directions and require low latency in packet transmission. 5G services may experience explosive increases in traffic load to support these diverse new use cases. On the other hand, the existing semi-static or dynamic TDD UL/DL configurations may have limitations in transmission time delay and interference between operators. The existing FDD method may have limitations in terms of efficient frequency resource utilization in the DL/UL directions. Therefore, introduction of a full duplex operation within a single carrier has been discussed for low latency and efficient resource utilization in NR.

Referring to FIG. 8, a method of applying the full duplex operation in an intra-carrier is illustrated. In detail, the full duplex operation may be considered as a subband-wise full duplex (SB-FD) scheme illustrated in (a) of FIG. 8 and a spectrum-sharing full duplex (SS-FD) scheme illustrated in (b) of FIG. 8.

For SB-FD, transmission and reception of DL and UL may be performed with different frequency resources in the same carrier. That is, DL and UL may have different frequency resources for the same time resource. For SS-FD, transmission and reception of DL and UL are performed through the same frequency resource or overlapped frequency resources in the same carrier. That is, for the same time resource, DL and UL may be allocated the same or overlapping frequency resources.

The full duplex operation may be combined with the existing half-duplex operation. For example, in the existing half-duplex-based TDD operation, only some time resources may be used for the full duplex operation. In time resources in which the full duplex operation is performed, either SB-FD or SS-FD operations may be performed.

Hereinafter, in a time resource operating as FD (e.g., SB-FD operation or SS-FD operation), a frequency resource operating as DL from among all frequency resources is defined as a DL sub-band, and a frequency resource operating as UL is defined as a UL sub-band.

In the case of full duplex (hereinafter, FD) operation as described above, the FD operation may be performed both from perspectives of a gNB and a UE. For example, both the gNB and the UE may perform transmission and reception of DL/UL simultaneously by using the same or different frequency resources in the same time resource. Alternatively, only the gNB may perform an FD operation (in the same time resource) and the UE may perform an HD operation. The gNB may simultaneously perform transmission and reception of DL and UL by using the same or different frequency resources in the same time resource, but the UE may perform only DL reception or UL transmission in a specific time resource. In this case, the gNB may perform the FD operation in a way that performs DL transmission and UL reception for different UEs at the same time (or, the same time resource).

The content described below is generally explained assuming that the gNB performs the FD operation and the UE performs the HD operation, but may also be applied to a case in which both the gNB and the UE perform the FD operation. Based on the above discussion, the following describes in detail a method of configuring a BWP resource for an intra-carrier FD operation.

### Background of FDR

Introduction of FDR has been discussed in certain scenarios (e.g. 3GPP RAN plenary). There are two types of FDRs discussed in the above scenarios, first, there is an FDR in which the gNB transmits and receives DL and UL (or transmits DL and receives UL) at the same frequency at the same time, and the other is an FDR in which the gNB transmits and receives DL and UL (or transmits DL and receives UL) at different frequencies at the same time. Here, different frequencies, unlike FDD, mean different frequency resources but different frequencies within the carrier or spectrum. For all cases, the UE may or may not support FDR, which means transmitting and receiving at the same time, whereas for all cases, it is assumed that the gNB performs transmitting and receiving at the same time.

In the operation of such FDR, gNB can consider dividing and setting the time durations of HD (half duplex) and FD (full duplex). This can be largely divided into SBFD (sub-band full duplex) and SFFD (single frequency full duplex), and the slot configuration and cell resource pattern for this can be considered to operate based on the following example.

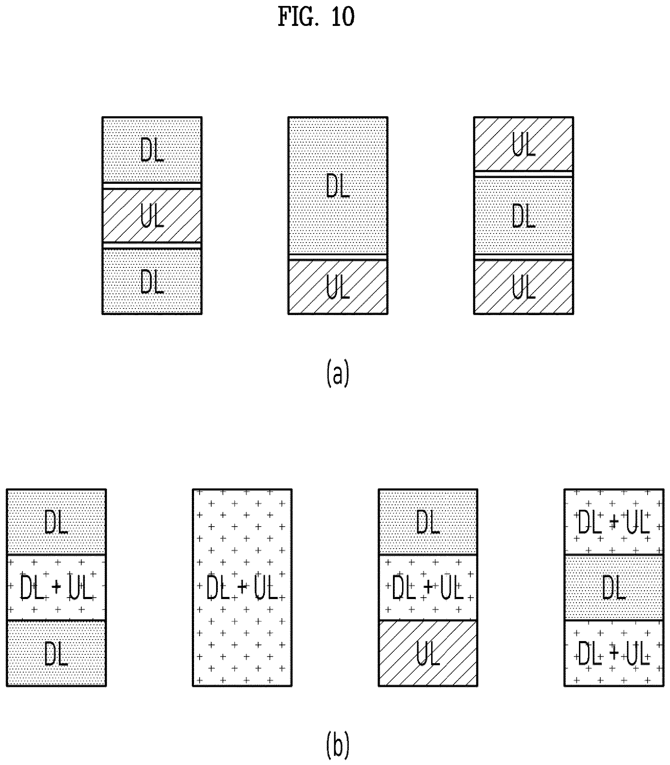

First, the SBFD may be considered as (a) of FIG. 9 and (a) of FIG. 10. In detail, referring to (a) of FIG. 10, a sub-band region of DL and a sub-band region of UL may not overlap each other. In this case, a guard band may exist between the sub-band region of DL and the sub-band region of UL (example of slot configuration). Alternatively, referring to (a) of FIG. 9, the SBFD operation may be performed based on a resource pattern of a cell or BS. For example, in the resource pattern, half-duplex (HD) slots/symbols and SBFD slots/symbols may be TDMed with each other.

Alternatively, SFFD may be considered as examples such as those in FIG. 9 (b) and FIG. 10 (b). Specifically, referring to FIG. 10 (b), the sub-band region of DL and the sub-band region of UL may overlap each other. Alternatively, referring to FIG. 9 (b), the SFFD operation may be performed based on a resource pattern of a cell or a base station. For example, in the resource pattern, an HD (half-duplex) slot/symbol and an SBFD slot/symbol may be TDMed with each other.

Hereinafter, for convenience of explanation, a time duration during which DL transmission and UL reception exist in the same/different frequencies at the same time in terms of a gNB operating in SBFD (or SFFD) is defined as an SBFD slot, an SFFD slot, or a full- duplex slot (or FD slot), and a slot during which the SBFD operation is not performed is defined as a half-duplex slot (or HD slot). The SFFD may also be defined as spectrum sharing full duplex (SSFD), and a method by which DL and UL are transmitted and received through the same frequency resources of overlapping slots/symbols is defined as the SSFD and explained below.

### Method of indicating location of time resource in SBFD operation

As a type of full duplex, the SBFD method and SSFD method described above have been currently developed/discussed. The SBFD may utilize some slots/symbols/sub-bands of downlink (DL) in the existing dynamic time division duplexing (TDD) as uplink (UL) resources, and DL (or DL resource) and UL (or UL resource) may exist simultaneously in different sub-bands in the same slot/symbol. As such, the SBFD operation may be defined as a transmission/reception operation or full-duplex operation of a BS in a slot/symbol in which DL (or DL resource) and UL (or UL resource) exist simultaneously in different sub-bands. Here, as described above, unlike the SBFD, the SSFD operation means transmission and reception through the same frequency resource of a slot/symbol in which DL and UL overlap each other. In addition, the current technology of the SBFD is half duplex in which a UE uses only one of UL/DL and is full duplex in terms of a BS, but the present disclosure describes determination on a full-duplex slot/symbol of the UE for the received indication, and thus may be applied to the full duplex of the UE as well. Hereinafter, for convenience of explanation, the SBFD and the SSFD will be collectively referred to as SBFD.

In a time duration in which the SBFD operation is performed, the BS may perform DL transmission and UL reception operations simultaneously, and the UE may perform only one operation from among DL reception and UL transmission. In a time duration in which the SBFD operation is performed, the UE may perform only one operation from among DL reception and UL transmission, and thus it may be difficult or impossible to distinguish between a time duration in which the SBFD operation is performed and a time duration in which the SBFD operation is not performed by using only a simple configuration of DL/UL in the existing TDD. In the case of the SBFD operation, an operation for UL and an operation for DL may be performed simultaneously in the same slot/symbol, interference between gNBs and/or UEs between inter Cell/intra Cell/sub-band/operator may occur. This interference may be defined as cross link interference (CLI). As various methods of handling such CLI, self-interference cancelation at the gNB, power control for UL and DL, and a method of adjusting MCS may be considered, and the gNB and the UE may perform a different operation in an HD time duration to perform the method of handling CLI in the time duration of the SBFD. In this aspect, the UE may need to distinguish between the time duration of the SBFD and the time duration of the HD.

Hereinafter, for convenience of explanation, the time duration, time resource, and symbols/slots in which the SBFD operation of a BS is performed are defined as an SBFD time duration. In this case, a start time resource or start point of the SBFD time duration may correspond to a first symbol/slot from among slots and/or symbols constituting the SBFD time duration, and an end or last time resource of the SBFD time duration may correspond to a last (or, end) symbol/slot from among slots and/or symbols constituting the SBFD time duration. The Duration related to the SBFD operation may correspond to a length of the SBFD time duration (or the number of symbols/slots provided in the SBFD time duration).

The methods proposed below may be applied to a time duration in which a full-duplex (FD) operation is performed by the BS and a half-duplex (HD) operation is performed by the UE, and the FD operation by the BS may include both the SBFD operation and/or the SSFD operation described above. Hereinafter, for convenience of explanation, it is assumed that the SBFD operation is performed as a FD operation by the BS, but the proposed methods below may be naturally applied not only to the SBFD operation but also to the SSFD operation.

As a method of indicating the SBFD time duration (or the location of the SBFD operation), an implicit indication method and an explicit indication method may be considered. The implicit indication method may be a method in which an existing gNB implicitly includes the time duration of the SBFD (or information about the SBFD) in the indication information and transmits the same to the UE. For example, TDD-UL-DL-ConfigCommon and TDD-UL-DL-ConfigDedicated may be provided in RRC parameter information of ServingCellConfigCommonSIB and ServingCellConfig, respectively. In this case, TDD information superimposed for a specific time duration may be provided between the TDD-UL-DL-ConfigDedicated and the TDD-UL-DL-ConfigCommond, and information about a time duration of the SBFD may be implicitly provided through the specific time duration (even though in a certain scenario (3GPP spec), TDD-UL-DL-ConfigDedicated is defined not to override information (DL-UL TDD information) previously configured through TDD-UL-DL-ConfigCommond). The explicit indication method may be a method of providing the UE with information about the time duration of SBFD (i.e., the time duration during which a FD operation is performed by the BS) by defining new indication information. A method of indicating a time duration of the SBFD by using both the implicit indication method and the explicit indication method may also be considered/used.

**Implicit determination by TDD configuration**

First, a time resource period assumed in relation to the method described above will be explained. Here, the time resource period may be one of the parameters defined in *TDD-UL-DL-ConfigCommon.* In detail, the time resource period may be for *dl-UL-TransmissionPeriodicity* for the gNB to inform the UE of the *UL-DL TDD configuration and* may correspond to a slot configuration period. In detail, parameters related to the time resource period may be defined/specified as shown in Table 5 below (refer to 3GPP TS 38.331). Hereinafter, a method of (implicitly) indicating an SBFD time duration (or SBFD time resources) based on the time resource period.

[Table 5]

| ***TDD-UL-DL-Pattern* field descriptions** |
| --- |
| ***dl-UL-TransmissionPeriodicity***<br>Periodicity of the DL-UL pattern, see TS 38.213 [13], clause 11.1. If the *dl-UL-TransmissionPeriodicity-v1530* is signalled, UE shall ignore the *dl-UL-TransmissionPeriodicity* (without suffix). |
| ***nrofDownlinkSlots***<br>Number of consecutive full DL slots at the beginning of each DL-UL pattern, see TS 38.213 [13], clause 11.1. In this release, the maximum value for this field is 80. |

(continued)

| **TDD-UL-DL-Pattern field descriptions** |
| --- |
| **nrofDownlinkSymbols**<br>Number of consecutive DL symbols in the beginning of the slot following the last full DL slot (as derived from *nrof-DownlinkSlots)*. The value 0 indicates that there is no partial-downlink slot. (see TS 38.213 [13], clause 11.1). |
| **nrofUplinkSlots**<br>Number of consecutive full UL slots at the end of each DL-UL pattern, see TS 38.213 [13], clause 11.1. In this release, the maximum value for this field is 80. |
| **nrofUplinkSymbols**<br>Number of consecutive UL symbols in the end of the slot preceding the first full UL slot (as derived from *nrofUplinkSlots)*. The value 0 indicates that there is no partial-uplink slot. (see TS 38.213 [13], clause 11.1). |

As described above, the implicit indication method for an SBFD time duration (or an SBFD operation (interval)) has an advantage of not requiring separate resources for indication. TDD-UL-DL-ConfigCommon provided in an RRC parameter ServingCellConfigCommonSIB may first provide/distribute common UL/DL configuration (for a time period) to all UEs within the cell (see TS 38.331). Here, all UEs within the cell may include both a legacy UE that does not support SBFD (or an operation in an SBFD time duration) and a UE that supports SBFD. Therefore, information about the SBFD operation or the SBFD time duration needs to be excluded from TDD-UL-DL-ConfigCommon, and thus a UL/DL configuration related to the SBFD time duration (or SBFD operation) needs to be provided in a UE-specific or group common parameter (or information). For example, as a related parameter, there is TDD-UL-DL-ConfigDedicated provided in ServingCellConfig, which is an RRC parameter, and a new RRC parameter (e.g., TDD-UL-DL-ConfigDedicated-DE) for indicating the SBFD operation or SBFD time duration may be defined. The SBFD configuration indication or the SBFD time duration indication through UE specific or group of common information may be performed based on at least one of the following two methods.

A first method may be an indication method using TDD-UL-DL-ConfigDedicated. The TDD-UL-DL-ConfigDedicated may only indicate a TDD configuration for a time durations (or symbols/slots indicated as flexible) indicated in TDD-UL-DL-ConfigCommon (as defined in TS 38.213). In this aspect, when the TDD configuration indication of TDD-UL-DL-ConfigDedicated overlaps with a time duration (e.g., UL/DL time duration) that is not a flexible time duration (flexible symbols/slots) configured/indicated by TDD-UL-DL-ConfigCommon, the UE may determine the overlapped time duration to be an SBFD time duration (or slots/symbols for the SBFD operation) for the SBFD operation. Alternatively, the SBFD operation may be performed on a time resource indicated as a flexible time duration by TDD-UL-DL-ConfigCommon and a configuration indication is made by TDD-UL-DL-ConfigDedicated, and thus, a new UE specific RRC parameter (e.g., TDD-UL-DL-ConfigDedicated-DE) may be defined to indicate the SBFD time duration (or the SBFD time resources/the SBFD symbols/slots) by indicating the time duration or time resources that overlap TDD-UL-DL-ConfigCommon. As a related method, a certain scenario (TS 38.213) may be redefined as shown in Table 6 below.

[Table 6]

| |
| --- |
| If the UE is additionally provided *tdd-UL-DL-ConfigurationDedicated,* the parameter *tdd-UL-DL-ConfigurationDedicated* overrides only flexible symbols per slot over the number of slots as provided by *tdd-UL-DL-ConfigurationCommon*. If configuration has overlapped between *tdd-UL-DL-ConfigurationCommon* and *tdd-UL-DL-ConfigurationDedicated* in same resource, UE expects the overlapped slot/symbol as SBFD operation. |
| If the UE is additionally provided *tdd-UL-DL-ConfigurationDedicated-DE,* UE expects the slot or symbol provided by *tdd-UL-DL-ConfigurationDedicated-DE* as SBFD operation. |

In a second method, all symbols/slots for a time duration during which the SBFD operation is performed from TDD-UL-DL-ConfigCommon from the beginning may be defined/configured as flexible slots/symbols, and a UL-DL TDD configuration may be indicated using a newly defined cell-specific RRC parameter (e.g., TDD-UL-DL-ConfigCommon-DE). A difference with the first method is that a new cell-specific RRC parameter (e.g., TDD-UL-DL-ConfigCommon-DE) is defined for a UE supporting a separate operation for SBFD slots/symbols (i.e. SBFD time duration) (e.g. power control parameter change configuration for a SBFD time durations or changing of MCS). In this case, a legacy UE that does not support a separate operation for SBFD may receive the existing TDD-UL-DL-ConfigCommon information and proceed with DL/UL configuration, and a UE that supports SBFD may additionally receive indication on a time duration in which an SBFD operation is performed through TDD-UL-DL-ConfigCommon-DE.

The second method is to configure TDD (UL/DL configuration) by using a new cell-specific parameter. Differently from the first method described above, the second method defines a new cell-specific (RRC) parameter (e.g., TDD-UL-DL-ConfigCommon-DE) for a UE supporting an operation related to an SBFD time duration. In this case, a legacy UE that does not support an operation related to the SBFD time duration may perform a DL/UL configuration based on the existing TDD-UL-DL-ConfigCommon, and a UE that supports an operation related to the SBFD time duration may be configured with the SBFD operation or SBFD time duration configured to flexible (via TDD-UL-DL-ConfigCommon-DE), and may be configured with UL/DL for the time duration configured to flexible UE-specifically. For example, parameters related to the second method may be configured/defined as shown in Table 7 below.

[Table 7]

| |
|---|
| If a UE is provided *tdd-UL-DL-ConfigurationCommon* and <u>*tdd-UL-DL-ConfigurationCommon-DE*,</u> the UE sets the slot format per slot over a number of slots as indicated by *tdd-UL-DL-ConfigurationCommon-DE.* <u>If it is indicated as downlink or flexible</u> by *tdd-UL-DL-ConfigurationCommon*, <u>but indicated as uplink or downlink by *tdd-UL-DL-ConfigurationCommon-DE*, it operates as SBFD.</u> <br> The *tdd-UL-DL-ConfigurationCommon-DE* provides <br>      - a reference SCS configuration $\mu_{ref}$ by *referenceSubcarrierSpacing* <br>      - a *pattern1*. <br> The *pattern1* provides <br>      - a slot configuration period of $P$ msec by *dl-UL-TransmissionPeriodicity* <br>      - a number of slots $d_{slots}$ with only downlink symbols by *nrofDownlinkSlots* <br>      - a number of downlink symbols $d_{sym}$ by *nrofDownlinkSymbols* <br>      - a number of slots $u_{slots}$ with only uplink symbols by *nrofUplinkSlots* <br>      - a number of uplink symbols $u_{sym}$ by *nrofUplinkSymbols* <br> Pattern 2 is same with pattern 1. |

Hereinafter, for convenience of explanation, an SBFD time duration (or SBFD time duration) is assumed to be a configuration corresponding to a time duration during which an SBFD operation is performed, time resources for the SBFD operation, and symbols/slots during which the SBFD operation is performed. A start symbol of the SBFD time duration may correspond to a first symbol from among a plurality of symbols providede in the SBFD time duration, and the last symbol of the SBFD time duration may correspond to a symbol located at an end from among the plurality of symbols provided in the SBFD time duration. Duration of the SBFD time duration may correspond to a length of the SBFD time duration.

For convenience of description, a description will be given assuming that a TDD configuration is a configuration corresponding to TDD-UL-DL-ConfigCommon, TDD-UL-DL-ConfigDedicated, or TDD-UL-DL-ConfigCommon-DE, which configures DL/UL time resources within a time period. A description will be given assuming that a DL time duration (or DL time duration) is a configuration corresponding to a time duration, time resources, and/or DL slots in which a DL operation configured based on the TDD configuration is performed and that a UL time duration (or UL time duration) is a configuration corresponding to a time duration, UL time resources, and/or DL slots in which a UL operation configured based on the TDD configuration is performed.

The proposed methods below are configured based on the SBFD operation/time duration, but the proposed methods described below may be applied to the SFFD operation/time duration as well, and are not limited to the SBFD operation/time duration.

### Explicit configuration

Explicit configuration has an advantage of being capable of explicitly indicating the SBFD time duration without ambiguity that may arise from implicit indication (e.g., the SBFD time duration may be determined even in a situation in which configurations between TDD-UL-DL-ConfigCommon and TDD-UL-DL-ConfigDedicated overlap each other). In the explicit configuration, the location of the SBFD time duration, which is a time duration related to the SBFD operation, may be indicated in units of slots/symbols within the time resource period, and the following various alternatives may be considered as a method of indicating the SBFD time duration in units of slots/symbols.

Hereinafter, the present disclosure is not limited to a single SBFD operation pattern depending on a UE. That is, a plurality of patterns may be defined for an SBFD operation or an SBFD time duration, such as pattern1 or pattern2 of a sub-item tdd-UL-DL-ConfigurationCommon of TS 38.213, and it may be expected that independent indication may be applied to each pattern. This is not only applied per time resource period defined by RRC, but also, when a plurality of consecutive SBFD operation sequences are defined for some slots/symbols within a single time resource period, each SBFD operation may have an independent indication. In other words, a plurality of patterns may be defined with respect to an SBFD time duration, and at least one pattern from among the plurality of patterns may be configured/indicated for each time resource period, or when there are a plurality of SBFD time durations for the SBFD operation within one time resource period, a pattern may be configured/indicated for each SBFD time duration. With respect to the Alts described below, it is not construed that the UE is limited to being indicated with the SBFD time duration by only one of the plurality of Alts. That is, the UE may be indicated to a SBFD time duration based on at least one (or all) of the Alts. For example, the UE may determine the SBFD time duration by selecting/applying a corresponding Alt method from among the Alt (alternatives) described below depending on an indicated parameter.

The patterns may include pattern1 and pattern2 as shown in Table 8 below. Here, P is a time resource period or a slot configuration period.

[Table 8]

| |
| --- |
| The first symbol every 20/*P* periods is a first symbol in an even frame. |
| If *tdd-UL-DL-ConfigurationCommon* provides both *pattern1* and *pattern2,* the UE sets the slot format per slot over a first number of slots as indicated by *pattern1* and the UE sets the slot format per slot over a second number of slots as indicated by *pattern2.* |

Parameters transmitted through semi-static RRC indication may be defined, as shown in Table 9 below. A semi-static RRC indication may be defined in a similar method to a slot configuration period (*dl-UL-TransmissionPeriodicity*) in *tdd-UL-DL-ConfigurationCommon.*

[Table 9]

| |
| --- |
| The *tdd-UL-DL-ConfigurationDedicated-DE* provides |
|     -a *pattern-n.* |
| The *pattern-n* provides |
|     - a starting slot $start_{slot}$ provided by *startSlot* |
|     - a starting slot $start_{slot}$ provided by *startSlot* |
|     - a starting symbol $start_{sym}$ provided by *startSymbol* |
|     - a last slot $last_{slot}$ provided by *lastSlot* |
|     - a last symbol $last_{sym}$ provided by *lastSymbol* |
|     - a SBFD slot duration $duration_{slot}$ provided by *durationSlot* |
|     - a SBFD symbol duration $duration_{symbol}$ provided by *durationSymbol* |
|     - a first transition point $TP_{first}$ provided by *firstTransitionPoint* |
|     - a second transition point $TP_{second}$ provided by *secondTransitionPoint* |
|     - a transition point TP provided by *TransitionPoint* |
|     - (other UE dedicated link direction configuration could be offer) |

As described above, a time resource period may be transferred to the UE through dl-UL-TransmissionPeriodicity of TDD-UL-DL-ConfigCommon, and the UE may divide boundaries of slots and symbols according to a subcarrier spacing contained in referenceSubcarrierSpacing. To accurately specify the location of the SBFD time duration within the time resource period defined in TDD-UL-DL-ConfigCommon, an indication may be required at a slot/symbol level, such as for each DL/UL time duration. As an example of an indication method at a slot/symbol level, the indication at the slot/symbol level in TDD-UL-DL-ConfigCommon may be considered. For example, in TDD-UL-DL-ConfigCommon, DL/UL configuration may be indicated on a DL time duration and a UL time duration in slot units through nrofDownlinkSlots and nrofUplinkSlots. The DL time duration may include as many slots as nrofDownlinkSlots slots starting from a first slot (or, start slot) of the time resource period, and the UL time duration may include as many slots as nrofUplinkSlots starting from an end slot (or, last slot) of the time resource period. After a slot level configuration as such, a symbol unit configuration for DL/UL configuration may be performed through nrofDownlinkSymbols and nrofUplinkSymbols. For example, for the remaining slots with the slot level configuration, as may slots as nrofDownlinkSymbols from a first symbol of the remaining slots may be provided in the DL time duration, and as many symbols as nrofUplinkSymbols from the last symbol of the remaining slots may be provided in the UL time duration.

First, an alternative for indicating an SBFD time duration based on the entire time resource period is described, and in detail, an alternative for changing an indication of the SBFD time duration based on the DL/UL configuration of a legacy UE that is incapable of an SBFD operation is described.

The time resource period may be transferred to the UE via dl-UL-TransmissionPeriodicity of TDD-UL-DL-ConfigCommon. In this case, the UE may distinguish/identify boundaries of slots and symbols based on a subcarrier spacing provided in referenceSubcarrierSpacing.

To accurately specify the SBFD time duration (or the location of the SBFD operation) within a time resource period defined in TDD-UL-DL-ConfigCommon, the SBFD time duration may be indicated at a slot/symbol level, such as a method of indicating/specifying a time duration of each DL/UL operation. As an example of an indication method at a slot/symbol level, the indication at the slot/symbol level in TDD-UL-DL-ConfigCommon may be considered. For example, in TDD-UL-DL-ConfigCommon, a DL/UL configuration may be indicated in symbol units through nrofDownlinkSlots and nrofUplinkSlots. In this case, DL may be configured from a front slot of a time resource period (a first slot of the time resource period), and UL may be configured from a back slot of the time resource period (the last slot of the time resource period). After the configuration in slot units described above, the DL/UL time duration may be configured in symbol units through nrofDownlinkSymbols and nrofUplinkSymbols. For example, in the same way as the configuration in slot units, the DL time duration may be configured from a front symbol (a first symbol of the remaining slot) in the remaining slots that are not configured as DL/UL time durations after the slot configuration, and the UL time duration may be configured from the back symbol of the remaining slot (the last symbol of the remaining slot).

In detail, referring to Table 5, through nrofDownlinkSlots and nrofUplinkSlots, the DL/UL configuration may be configured in slot units within the time resource period, and a DL time duration (or DL slot interval) may be configured from a front slot (or a first slot) of the time resource period, and a UL time duration (or UL slot interval) may be configured from a back slot (or a last slot) of the time resource period. For example, nrofUplinkSlots may be configure the UL time duration by indicating the number of consecutive slots from an end slot of the time resource period, and nrofDownlinkSlots may configure the DL time duration by indicating the number of consecutive slots from the start slot of the time resource period. Here, the start slot/end slot of the time resource period may be determined/configured based on a DL-UL pattern for the time resource period. After the UL-DL configuration in slot units, the DL/UL time duration may be configured in symbol units through nrofDownlinkSymbols and nrofUplinkSymbols. For example, nrofDownlinkSymbols may indicate the number of DL symbols to be continuous from start of a slot following the last slot of the DL (slot) interval configured in slot units, and nrofUplinkSymbols may indicate the number of UL symbols to be continuous from an end of a slot preceding the first slot of the UL (slot) interval configured in slot units. Similar to a method of configuring a UL time duration and a DL time duration in symbol/slot units, the SBFD time durations may also be indicated at a slot/symbol level within the time resource period of the entire TDD-UL-DL-ConfigCommon.

## 1. Indication of SBFD time duration regardless of non-SBFD configuration

Hereinafter, a method of determining/specifying an SBFD time duration during which an SBFD operation of a BS is performed within a time resource period defined through TDD-UL-DL-ConfigCommon provided to a UE through a BS is described. The configuration information indicating the SBFD time duration may be provided/indicated to the UE through system information or RRC configuration. In this case, the SBFD time duration may be indicated by sequences including consecutive symbols.

Table 10 defines the number of slots within a time resource period based on a certain scenario (TS 38.213).

[Table 10]

A value $P$ = 0.625 msec is valid only for $\mu_{ref}$ = 3. A value $P$ = 1.25 msec is valid only for $\mu_{ref}$ = 2 or $\mu_{ref}$ = 3. A value $P$ = 2.5 msec is valid only for $\mu_{ref}$ = 1, or $\mu_{ref}$ = 2, or $\mu_{ref}$ = 3.

A slot configuration period of $P$ msec includes $S = P \cdot 2^{\mu_{ref}}$ slots with SCS configuration $\mu_{ref}$.

Here, an index of each slot may be sequentially indexed starting with a first slot in the time resource period as 0, and an index of each symbol may be sequentially indexed starting with a first symbol in the first slot as 0. Indexes defined below may be defined for convenience of explanation and may naturally be applied to a case in which indexing is performed in a different method.

A guard band related to an SBFD operation may not be located in a DL sub-band when the guard band is located in a UL sub-band at a BS, and the UE may determine that the SBFD operation of the BS may be performed for the entire SBFD time duration including the guard band. A length of a time resource of the guard band is not described below.

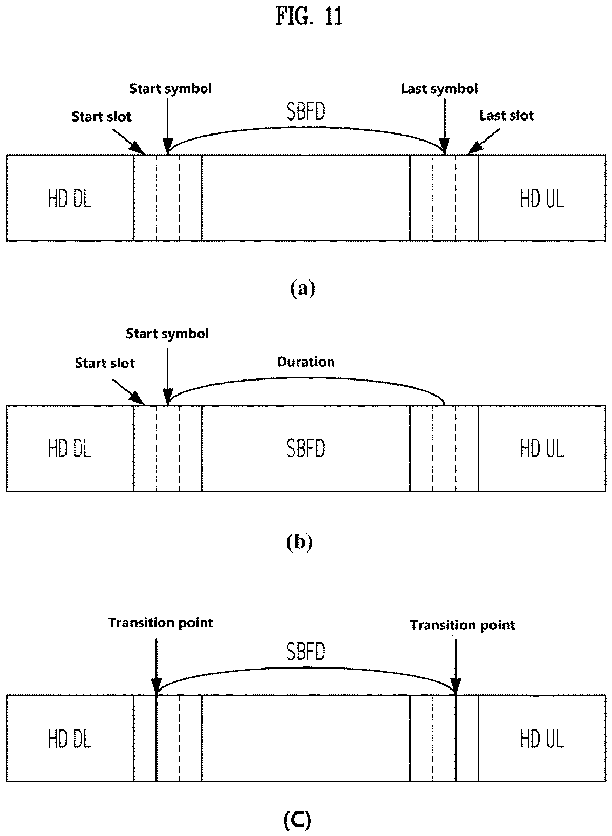

FIG. 11 is a diagram for explaining a method of indicating an SBFD time duration within a time resource period.

(1) Alt. 1-1: Indication of start slot/symbol and last slot/symbol

Referring to FIG. 11 (a), in Alt. 1-1, the UE may be indicated by the BS of locations of a start symbol (and/or start slot) and a last symbol (and/or the last slot) of the SBFD time duration (or, SBFD time resources).

The start symbol means the location of the first symbol at which an indicated SBFD time resource starts based on a start position of the time resource period of the TDD configuration (e.g., a slot with index 0). To indicate this start symbol, the BS may indicate to the UE the location of the start slot and the location of the start symbol within the start slot. In this case, the UE may determine a slot after the index of the indicated start slot based on a slot of index 0 as a start slot, and may determine a symbol after the indicated symbol index based on a symbol of index 0 in the start slot as the start symbol. The symbol indicated by the location of the start symbol may be determined as the first symbol of the SBFD time duration.

For example, the UE may be indicated with a slot index and a symbol index indicating a start position of the SBFD time duration from the configuration information. The UE may specify a slot having the indicated slot index as a start slot of the SBFD based on a start slot of the time resource period in which the slot index is 0, and may specify a symbol having the indicated symbol index within the start slot of the SBFD as a start symbol of the SBFD. Alternatively, the UE may receive slot offset and symbol offset information indicating a start position (start slot/start symbol) of the SBFD time duration from the configuration information, and may specify a slot after the slot offset from the start slot of the time resource period as the start slot of the SBFD, and may specify a symbol after the symbol offset from the first symbol of the start slot of the SBFD as the start symbol of the SBFD.

The last symbol means the location of the last symbol of the SBFD time duration indicated based on the end/last location of the time resource period of the TDD configuration. The last symbol may be determined/specified by indication of the location of the last slot and the location of the last symbol within the last slot.

Alternatively, the UE may receive slot offset and symbol offset information indicating a last position (last slot/last symbol) of the SBFD time duration from the configuration information, and may specify a slot before the slot offset from the last slot of the time resource period as the last slot of the SBFD, and may specify a symbol before the symbol offset from the first symbol of the last slot of the SBFD as the last symbol of the SBFD. Alternatively, the UE may be indicated with a slot index and a symbol index indicating a last position of the SBFD time duration from the configuration information. The UE may specify a slot having the indicated slot index as a last slot of the SBFD based on a first slot of the time resource period in which the slot index is 0, and may specify a symbol having the indicated symbol index within the last slot of the SBFD as a last symbol of the SBFD.

When only the start slot and the last slot of the SBFD time duration are indicated (i.e., when a start symbol and a last symbol of the SBFD time duration are not separately indicated), the UE may determine the first symbol within the start slot as the start symbol of the SBFD time duration, and may determine the last symbol (or, the first symbol) within the last slot as the last symbol of the SBFD time duration.

As such, when the location of the start symbol of the SBFD time duration and the location of the last symbol of the SBFD time duration are indicated, the UE may determine a time from the start symbol of the SBFD time duration to the last symbol of the SBFD time duration within the time resource period of the TDD configuration as the BS (or cell) SBFD time duration, and may determine the remaining time duration or remaining time resource excluding the indicated SBFD time duration in the time resource period as the time duration during which the BS performs the HD or TDD operation. The indication method according to Alt 1-1 has an advantage of being capable of explicitly indicating the SBFD time duration (or time resource of the SBFD operation) to the UE regardless of the configuration of the DL time duration and UL time duration within the time resource period.

(2) Alt 1-2: Start slot/symbol and duration indication of SBFD time duration

Referring to FIG. 11(b), in the case of Alt 1-2, the UE may be indicated by the location of the start slot/symbol and duration of the SBFD time duration from the BS.

The start symbol means the location of the first symbol at which an indicated SBFD time resource starts based on a start position of the time resource period of the TDD configuration (e.g., a slot with index 0). To indicate this start symbol, the BS may indicate to the UE the location of the start slot and the location of the start symbol within the start slot. In this case, the UE may determine a slot after the index of the indicated start slot based on a slot of index 0 as a start slot, and may determine a symbol after the indicated symbol index based on a symbol of index 0 in the start slot as the start symbol. The symbol indicated by the location of the start symbol may be determined as the first symbol of the SBFD time duration.

For example, the UE may be indicated with a slot index and a symbol index indicating a start position of the SBFD time duration from the configuration information. The UE may specify a slot having the indicated slot index as a start slot of the SBFD based on a start slot of the time resource period in which the slot index is 0, and may specify a symbol having the indicated symbol index within the start slot of the SBFD as a start symbol of the SBFD. Alternatively, the UE may receive slot offset and symbol offset information indicating a start position (start slot/start symbol) of the SBFD time duration from the configuration information, and may specify a slot after the slot offset from the start slot of the time resource period as the start slot of the SBFD, and may specify a symbol after the symbol offset from the first symbol of the start slot of the SBFD as the start symbol of the SBFD.

The duration may be defined as the amount of time resources or the number of consecutive time resources constituting the SBFD time duration based on a start position of the SBFD time duration. As a first example, the duration may be indicated by the number of slots in the duration and the number of duration symbols. In this case, the UE may determine the duration of the SBFD time duration as the number of slots equal to the number of duration slots and the number of symbols equal to the number of duration symbols indicated from the start slot of the SBFD. Alternatively, the UE may determine a slot following the indicated slot index based on the start slot of index 0 as the slot indicated by the duration, and may determine a symbol following the indicated symbol index based on a slot of index 0 in the slot as the symbol indicated by the duration.

As a second example, the duration may be indicated by the number of configured slots and the number of symbols. In this case, the UE may determine a length of the duration of the SBFD time duration as the 'number of slots' * 'number of OFDM symbols constituting the slot' + 'number of symbols'.

As such, when the location of the start symbol of the SBFD time duration and the duration of the SBFD time duration are indicated, the UE may determine a time duration from the start symbol of the indicated SBFD time duration to the length of the duration within the time resource period of the TDD configuration as an SBFD time duration during which the base station performs an SBFD operation, and may determine the remaining time duration or remaining time resource excluding the indicated SBFD time duration in the time resource period as the time duration during which the BS performs the HD or TDD operation. The indication method according to Alt 1-2 has an advantage of being capable of explicitly indicating the SBFD time duration (or time resource of the SBFD operation) to the UE regardless of the configuration of the DL time duration and UL time duration within the time resource period.

(3) Alt 1-3: Indication of two transition points in SBFD time duration.

Referring to FIG. 11(C), in Alt 1-3, the UE may be indicated by the BS about two transition points for the SBFD time duration.

The transition point may include two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

TDD-UL-DL-ConfigCommon is signaling for a time resource period for a non-SBFD operation, and the SBFD time duration may be UE-specific or UE-specific group signaling within the time resource period. Therefore, after the TDD time resource period is configured according to TDD-UL-DL-ConfigCommon, the SBFD time duration may be configured based on the time resource period. Therefore, from among the two transition points, the first transition point is expected/defined as a point between the two symbols transitioning from a non-SBFD symbol (i.e., a symbol in an HD time duration) to an SBFD symbol (i.e., a symbol in an SBFD time duration), and the second transition point is expected/defined as a point between the two symbols transitioning from the SBFD symbol to a non-SBFD symbol.

As such, when the UE is divided into two transition points indicated by the BS as a first transition point and a second transition point, the UE may determine the SBFD time duration (or a range of the SBFD operation) based on the two transition points. The first transition point is a point between a non-SBFD symbol and an SBFD symbol, and thus the UE may determine/specify the first symbol after the transition point as the start point or time symbol of the SBFD time duration. The second transition point is a point between an SBFD symbol and a non-SBFD symbol, and thus the UE may determine/specify the symbol immediately before the second transition point as the last symbol of the SBFD time duration.

As such, the UE may determine the first symbol of the SBFD time duration (or the start symbol of the SBFD time duration) as the last symbol of the SBFD time duration through the two transition points, and determine the time duration from the start symbol of the SBFD time duration to the last symbol of the SBFD time duration as the time duration in which the BS performs the SBFD operation, and determine the remaining time duration as the time duration in which the BS performs the TDD or HD operation. The indication method according to Alt 1-3 has an advantage of being capable of explicitly indicating the SBFD time duration (or time resource of the SBFD operation) to the UE regardless of the configuration of the DL time duration and UL time duration within the time resource period.

## 2. Indication considering DL time duration and/or UL time duration in TDD configuration

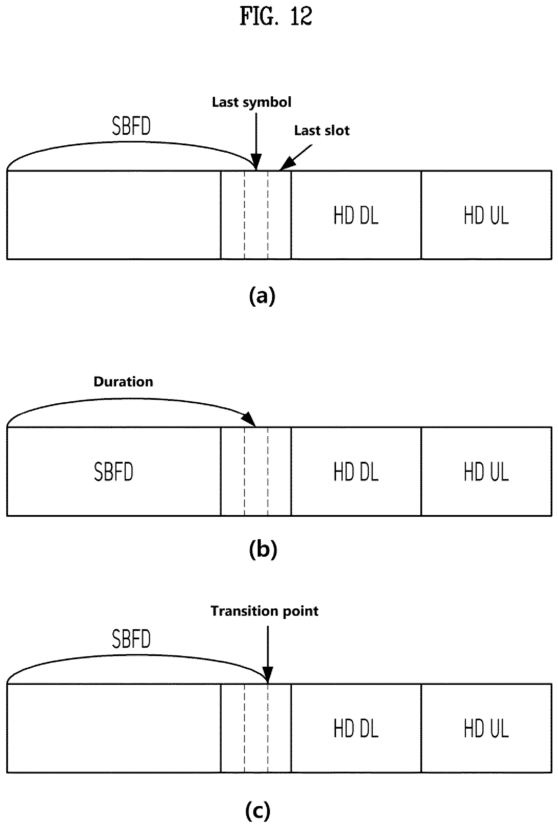

FIG. 12 is a diagram for explaining a method of indicating an SBFD time duration by considering a DL time duration and/or a UL time duration configured within a time resource period.

In TDD-UL-DL-ConfigCommon, DL (or DL time duration) is defined from a first slot/symbol of the time resource period and UL (or UL time duration) is defined from the last slot/symbol in a process of indicating a non-SBFD operation. Slots/symbols not defined as DL/UL in TDD-UL-DL-ConfigCommon may be defined as a flexible time duration. In this case, a time resource period according to TDD-UL-DL-ConfigCommon may be naturally TDDed in the order of DL-flexible-UL from a first slot. When a flexible interval (or flexible slot/symbol) is not defined, a time resource period according to TDD-UL-DL-ConfigCommon may be TDDed in DL-UL order. In this case, when the SBFD time duration is additionally defined within the time resource period, the time resource period may be defined in a total of five forms including SBFD-DL-UL, DL-SBFD-DL-UL, DL-SBFD-UL, DL-UL-SBFD-UL, and DL-UL-SBFD. From among the five cases, there are three cases including SBFD-DL-UL, DL-SBFD-UL, and DL-UL-SBFD, in which the boundary (border) of a DL or UL slot/symbol may be a (indicative) reference for the SBFD time duration. Hereinafter, for convenience of explanation, only three of the five cases are described. Even if a flexible interval is configured by TDD-UL-DL-ConfigCommon (or non-SBFD configuration), the proposed disclosure may be applied to a case in which the flexible interval is overridden by a configuration of the SBFD time duration.

Hereinafter, a method of indicating the SBFD time duration when the boundary of the DL slot/symbol (and/or UL slot/symbol) is indicative as a reference for indicating the SBFD time duration (when defined as DL-UL without flexible slot/symbol in TDD-UL-DL-ConfigCommon) will be described in detail.

Table 11 below defines a method of indicating a configuration of a non-SBFD operation via TDD-UL-DL-ConfigCommon (see TS 38.214).

[Table 11]

A slot configuration period of $P$ msec includes $S = P \cdot 2^{\mu_{ref}}$ slots with SCS configuration $\mu_{ref}$. From the $S$ slots, a first $d_{slots}$ include only downlink symbols and a last $u_{slots}$ slots include only uplink symbols. The $d_{sym}$ symbols after the first $d_{slots}$ slots are downlink symbols. The $u_{sym}$ symbols before the last $u_{slots}$ slots are uplink symbols. The remaining $\left(S - d_{slots} - u_{slots}\right) \cdot N_{symb}^{slot} - d_{sym} - u_{sym}$ are flexible symbols.

(1) When defined as SBFD-DL-UL within a time resource period

1) Alt. 2-1-1: Indication of last slot/symbol of SBFD time duration

Referring to FIG. 12(a), in Alt. 2-1-1, the UE may be indicated by a last location (location of last symbol/slot) of the SBFD time duration from the BS.

The last symbol means the location of the last symbol of the SBFD time duration indicated based on the end/last location of the time resource period of the TDD configuration. The last symbol may be determined/specified by indication of the location of the last slot and the location of the last symbol within the last slot.

Alternatively, the UE may receive slot offset and symbol offset information indicating a last position (last slot/last symbol) of the SBFD time duration from the configuration information, and may specify a slot before the slot offset from the last slot of the time resource period as the last slot of the SBFD, and may specify a symbol before the symbol offset from the first symbol of the last slot of the SBFD as the last symbol of the SBFD. Alternatively, the UE may be indicated with a slot index and a symbol index indicating a last position of the SBFD time duration from the configuration information. The UE may specify a slot having the indicated slot index as a last slot of the SBFD based on a first slot of the time resource period in which the slot index is 0, and may specify a symbol having the indicated symbol index within the last slot of the SBFD as a last symbol of the SBFD.

In this case, the UE may determine that a time from a start slot/symbol (slot with slot index 0 and/or symbol with symbol index 0) of the time resource period to a last location of the indicated SBFD time duration (the last slot/symbol of the SBFD time duration) is the SBFD time duration in which the BS or cell performs the SBFD operation, when the last location of the SBFD time duration is indicated, and may determine/specify the remaining time duration as a time duration in which the BS or cell performs the HD or TDD operation. In this case, it may be advantageous in that usage of an RRC resource may be reduced compared to when indicated (Alt 1-1 to Alt 1-3) regardless of a non-SBFD configuration.

2) Alt. 2-1-2: Indication of duration of SBFD time duration

Referring to FIG. 12(b), in the case of Alt 2-1-2, the UE may be indicated by a duration, which is a length of the SBFD time duration.

The duration may be defined as the amount of time resources or the number of consecutive time resources constituting the SBFD time duration based on a start position of the SBFD time duration. As a first example, the duration may be indicated by the number of slots in the duration and the number of duration symbols. In this case, the UE may determine the duration of the SBFD time duration as the number of slots equal to the number of duration slots and the number of symbols equal to the number of duration symbols indicated from the start slot of the SBFD. Alternatively, the UE may determine a slot following the indicated slot index based on the start slot of index 0 as the slot indicated by the duration, and may determine a symbol following the indicated symbol index based on a slot of index 0 in the slot as the symbol indicated by the duration.

As a second example, the duration may be indicated by the number of configured slots and the number of symbols. In this case, the UE may determine a length of the duration of the SBFD time duration as the 'number of slots' * 'number of OFDM symbols constituting the slot' + 'number of symbols'.

As such, when the duration is indicated, the UE may determine a time duration from a start position of the time resource period (a start symbol of the time resource period, the slot/symbol with index 0) to the length of the duration as an SBFD time duration during which the BS performs an SBFD operation, and may determine the remaining time duration or remaining time resource excluding the indicated SBFD time duration from the time resource period as a time duration during which the BS performs an HD or TDD operation. In this case, it may be advantageous in that usage of an RRC resource may be reduced compared to when indicated (Alt 1-1 to Alt 1-3) regardless of a non-SBFD configuration.

3) Alt. 2-1-3: When one transition point is indicated as the last transition point.

Referring to FIG. 12(c), in the case of Alt 2-1-3, the UE may be indicated by the BS to one transition point for the SBFD time duration as a last transition point.

The transition point may include two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

For Alt 2-1-3, the UE may be indicated by one transition point for the second transition point, and may specify/determine the SBFD time duration by using the one transition point. The transition point in the second case is a transition point between an SBFD symbol and a non-SBFD symbol, and thus a symbol immediately before the transition point may be determined as the last symbol of the SBFD operation. In detail, the UE may determine/specify continuous time resources from a start (slot/symbol with index 0) of the time resource period to a last symbol of SBFD indicated by the one time resource period as the SBFD time duration during which the BS performs the SBFD operation, and may determine the remaining time durations or remaining time resources excluding the indicated SBFD time duration in the time resource period as the time duration during which the BS performs the HD or TDD operation. In this case, it may be advantageous in that usage of an RRC resource may be reduced compared to when indicated (Alt 1-1 to Alt 1-3) regardless of a non-SBFD configuration.

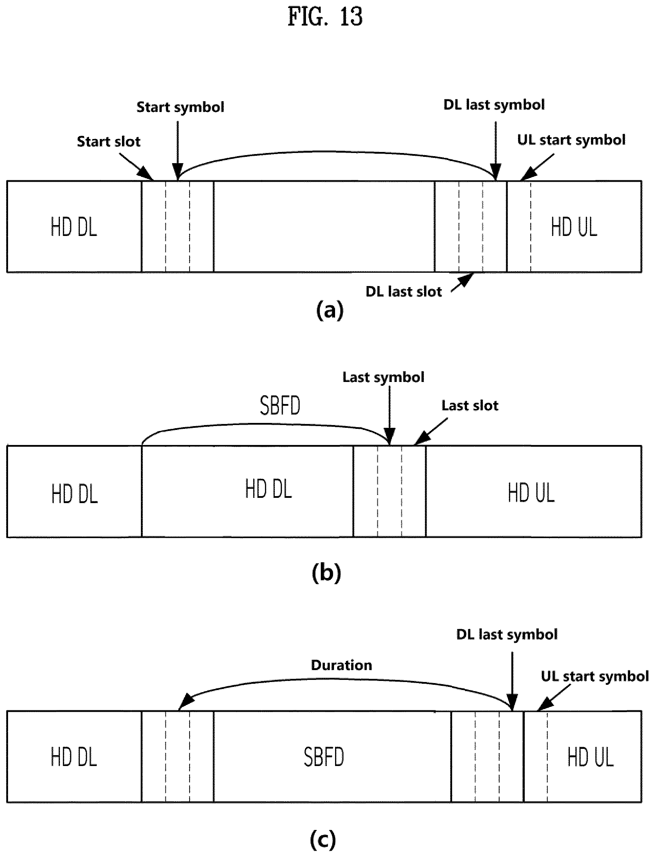

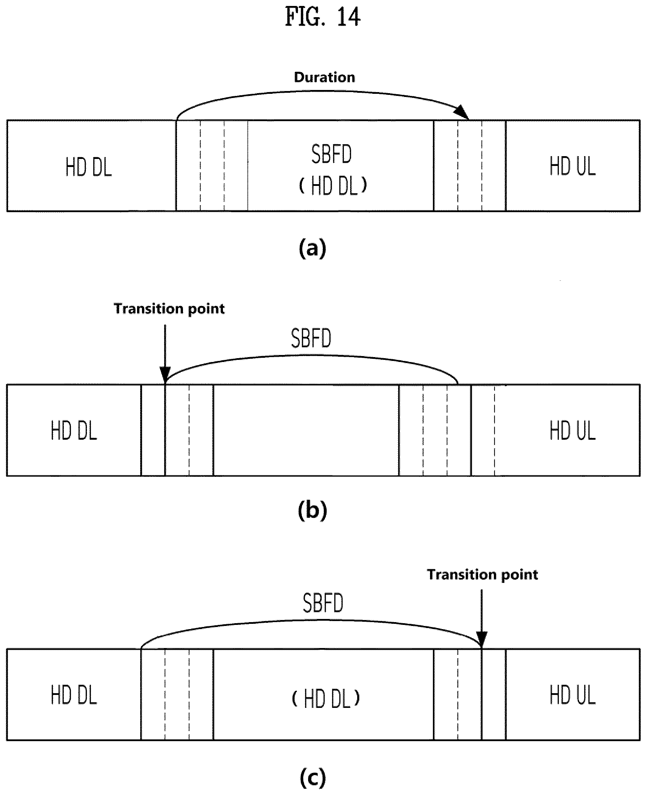

FIG. 13 and FIG. 14 are diagrams for explaining a method of indicating an SBFD time duration based on a boundary of a DL time duration or a UL time duration within a time resource period.

(2) Alt. 2-2: When defined as DL-SBFD-UL within a time resource period

In the case of Alt 2-2, the SBFD time duration is specified/indicated within the DL time duration configured by the TDD configuration, and may be indicated to the UE based on at least one of the following alternatives.

1) Alt. 2-2-1: When only a start slot/symbol of the SBFD time duration is indicated

Referring to FIG. 13(a), in Alt 2-2-1, the UE may only be indicated by a start position of the SBFD time duration (start slot/symbol of the SBFD) from the BS.

The start symbol means the location of the first symbol at which an indicated SBFD time resource starts based on a start position of the time resource period of the TDD configuration (e.g., a slot with index 0). To indicate this start symbol, the BS may indicate to the UE the location of the start slot and the location of the start symbol within the start slot. In this case, the UE may determine a slot after the index of the indicated start slot based on a slot of index 0 as a start slot, and may determine a symbol after the indicated symbol index based on a symbol of index 0 in the start slot as the start symbol. The symbol indicated by the location of the start symbol may be determined as the first symbol of the SBFD time duration.

For example, the UE may be indicated with a slot index and a symbol index indicating a start position of the SBFD time duration from the configuration information. The UE may specify a slot having the indicated slot index as a start slot of the SBFD based on a start slot of the time resource period in which the slot index is 0, and may specify a symbol having the indicated symbol index within the start slot of the SBFD as a start symbol of the SBFD. Alternatively, the UE may receive slot offset and symbol offset information indicating a start position (start slot/start symbol) of the SBFD time duration from the configuration information, and may specify a slot after the slot offset from the start slot of the time resource period as the start slot of the SBFD, and may specify a symbol after the symbol offset from the first symbol of the start slot of the SBFD as the start symbol of the SBFD.

When the BS indicates only a start position without indicating an end position of the SBFD time duration, the UE may specify the SBFD time duration by further considering a boundary of the UL time duration (or a boundary of the DL time duration) configured by the TDD configuration. For example, the UE may consider/determine that a last symbol of the SBFD time duration, which is not explicitly indicated by the BS, is implicitly indicated as a symbol immediately before the start symbol of the UL time duration (or, the last symbol of the DL time duration). In this case, the UE may determine/specify the SBFD time duration from the start position of the indicated SBFD time duration (i.e., the first symbol/slot of the SBFD time duration) to the symbol immediately before the first symbol/slot of the UL time duration according to the TDD configuration (i.e., the last symbol of the SBFD time duration). Alternatively, the UE may determine the SBFD time duration from the start position of the indicated SBFD time duration (i.e., the first symbol/slot of the SBFD time duration) to the last symbol/slot of the DL time duration according to the TDD configuration.

In this case, the UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

2) Alt. 2-2-2: When only the last slot/symbol of the SBFD time duration is indicated.

Referring to FIG. 13(b), in Alt. 2-2-2, the UE may only be indicated by an end position of the SBFD time duration (last slot/symbol of the SBFD) from the BS.

The last symbol means the location of the last symbol of the SBFD time duration indicated based on the end/last location of the time resource period of the TDD configuration. The last symbol may be determined/specified by indication of the location of the last slot and the location of the last symbol within the last slot.

Alternatively, the UE may receive slot offset and symbol offset information indicating a last position (last slot/last symbol) of the SBFD time duration from the configuration information, and may specify a slot before the slot offset from the last slot of the time resource period as the last slot of the SBFD, and may specify a symbol before the symbol offset from the first symbol of the last slot of the SBFD as the last symbol of the SBFD. Alternatively, the UE may be indicated with a slot index and a symbol index indicating a last position of the SBFD time duration from the configuration information. The UE may specify a slot having the indicated slot index as a last slot of the SBFD based on a first slot of the time resource period in which the slot index is 0, and may specify a symbol having the indicated symbol index within the last slot of the SBFD as a last symbol of the SBFD.

When the BS indicates only a last position without indicating a start position of the SBFD time duration, the UE may specify the SBFD time duration by further considering a boundary of the DL time duration (or a boundary of the DL time duration) configured by the TDD configuration. For example, the UE may consider/determine that a start symbol of the SBFD time duration, which is not explicitly indicated by the BS, is implicitly indicated as a start symbol of the UL time duration (or, the last symbol of the DL time duration). In this case, the UE may determine/specify the SBFD time duration from a DL start slot/symbol to the last symbol of the indicated SBFD time duration within the time resource period.

For example, DL-DL-UL may be configured within the time resource period, and the last symbol of the SBFD time duration may be indicated within the second DL time duration. In this case, the UE may determine/specify an interval from the start symbol/slot of the second DL time duration to the last symbol of the SBFD time duration as the SBFD time duration. In that only a DL time duration including the last symbol of the SBFD time duration, Alt. 2-2-2 is different from Alt. 2-1-1 from a start position of the time resource period.

The UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

3) Alt. 2-2-3: When the duration of the SBFD time duration is indicated in a reverse direction of the time resource.

Referring to FIG. 13(c), in Alt. 2-2-3, the UE may be indicated by a duration, which is the length of the SBFD time duration.

In Alt. 2-2-3, the duration may be defined as the amount of time resources or the number of consecutive time resources constituting the SBFD time duration based on the last position of the SBFD time duration (or, the last symbol/slot of the SBFD time duration).

In this case, even without a separate indication, the UE may determine a time duration that is temporally backward by the indicated duration based on the first symbol of the first slot of the UL time duration configured by the TDD configuration (or the first symbol of the UL time duration, the start symbol of the UL time duration) with respect to the last position of the SBFD time duration (or the last symbol/slot of the SBFD time duration) as the SBFD time duration. Alternatively, even without a separate indication, the UE may determine a time duration that is temporally backward by the indicated duration based on the last symbol of the last slot of the UL time duration configured by the TDD configuration (or the last symbol of the DL time duration) with respect to the last position of the SBFD time duration (or the last symbol/slot of the SBFD time duration) as the SBFD time duration. Based on the start symbol of the UL time duration, the SBFD time duration may not include the start symbol of the UL time duration, and based on the last symbol of the DL time duration, the SBFD time duration may include the last symbol of the DL time duration.

Here, the duration may be indicated by the number of slots of the duration and the number of duration symbols, or by the number of consecutive symbols (or the number of consecutive slots). For example, the duration may be indicated by the number of slots of the duration and the number of duration symbols (first indication example). In this case, the UE may determine slots previous (backwards in the time domain) by the number of the indicated duration slots based on the slots of the UL time duration configured according to the TDD configuration (i.e., based on the start slot index of the UL time duration), and may determine symbols previous (backwards in the time domain) by the number of duration symbols based on the last symbol of the first slot from among the slots, and may determine the determined slots and the symbols as the duration of the SBFD time duration. Alternatively, the duration may be indicated by the number of slots and the number of symbols (second indication example). In this case, the UE may determine the duration of the SBFD time duration as the 'number of slots' * 'number of OFDM symbols constituting the slot' + 'number of symbols'.

As such, the UE may be indicated with information on the number of consecutive slots and/or symbols constituting the SBFD time duration as information on the duration, and may determine/specify the SBFD time duration including slots and/or symbols for the number information based on a boundary of the UL time duration according to the TDD configuration (i.e., the start symbol of the UL time duration). In this case, the UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

4) Alt. 2-2-3: When the duration of the SBFD time duration is indicated in a forward direction of the time resource.

Referring to FIG. 14(a), in Alt. 2-2-4, the UE may be indicated by a duration, which is the length of the SBFD time duration.

In Alt. 2-2-4, the duration may be defined as the amount of time resources or the number of consecutive time resources constituting the SBFD time duration based on the start position of the SBFD time duration (or, the start symbol/slot of the SBFD time duration).

In this case, even without a separate indication, the UE may determine a time duration in a forward direction of the indicated duration based on a first symbol of the first slot of the DL time duration configured by the TDD configuration as the start position of the SBFD time duration (or the start symbol/slot of the SBFD time duration).

Here, the duration may be indicated by the number of slots of the duration and the number of duration symbols, or by the number of consecutive symbols (or the number of consecutive slots). For example, the duration may be indicated by the number of slots of the duration and the number of duration symbols. Alternatively, the duration may be indicated by the number of slots and the number of symbols. In this case, the UE may determine the duration of the SBFD time duration as the 'number of slots' * 'number of OFDM symbols constituting the slot' + 'number of symbols'.

As such, the UE may be indicated with information on the number of consecutive slots and/or symbols constituting the SBFD time duration as information on the duration, and may determine/specify the SBFD time duration including slots and/or symbols for the number information based on a boundary of the DL time duration according to the TDD configuration (i.e., the start symbol of the DL time duration). In this case, the UE may determines the determined/specified SBFD time duration as a interval in which the BS performs the SBFD operation based on the indication of the duration of the SBFD time duration and the DL time duration according to the TDD configuration, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

5) Alt. 2-2-5: When indicated to the first transition point

Referring to FIG. 14(b), in the case of Alt 2-2-5, the UE may be indicated by the BS to one transition point for the SBFD time duration as a first transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

As illustrated in FIG. 14(b), when the first transition point is indicated, the UE may determine/specify the consecutive symbols from the first transition point (i.e., as the start symbol of the SBFD time duration) to the last symbol of the DL according to the TDD configuration or to the symbol immediately before the start symbol of the UL time duration (non-SBFD configured UL start slot/symbol) as the SBFD time duration. In this case, the UE may determine the specified/determined SBFD time duration as a time duration for SBFD operation of the BS, and may determine a time duration excluding the SBFD time duration from the time resource period as a time duration for HD or TDD operation of the BS. In this case, it may be advantageous in that usage of an RRC resource may be reduced compared to when indicated (Alt 1-1 to Alt 1-3) regardless of a non-SBFD configuration.

6) Alt. 2-2-6: When indicated to the second transition point

Referring to FIG. 14(c), in the case of Alt 2-2-6, the UE may be indicated by the BS to one transition point for the SBFD time duration as a second transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

As illustrated in FIG. 14(c), when the second transition point is indicated, the UE may determine/specify an interval from the start symbol of DL according to the TDD configuration (e.g., the start symbol of the second DL in case of DL-DL-UL) to the second transition point (i.e., as the last symbol of the SBFD time duration) as the SBFD time duration. In this case, the UE may determine the specified/determined SBFD time duration as a time duration for SBFD operation of the BS, and may determine a time duration excluding the SBFD time duration from the time resource period as a time duration for HD or TDD operation of the BS. In this case, it may be advantageous in that usage of an RRC resource may be reduced compared to when indicated (Alt 1-1 to Alt 1-3) regardless of a non-SBFD configuration.

(3) Alt. 2-3: When defined as DL-UL-SBFD within a time resource period

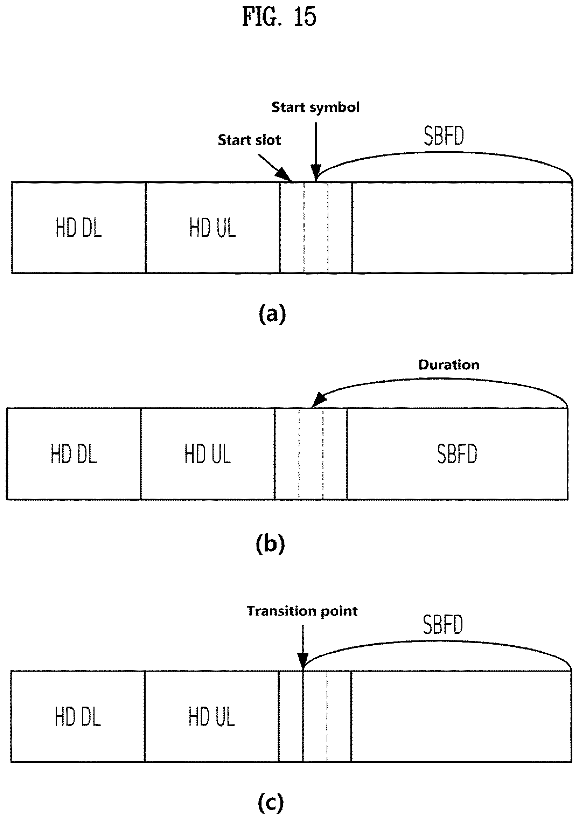

FIG. 15 is a diagram for explaining a method of configuring a DL time duration-UL time duration-SBFD interval within a time resource period.

In Alt. 2-3, indication methods for configuring an SBFD time duration within a UL time duration are described, and specific alternatives are as follows.

1) Alt. 2-3-1: When only a start slot/symbol of the SBFD time duration is indicated

Referring to FIG. 15(a), in Alt. 2-3-1, the UE may only be indicated by a start position of the SBFD time duration (start slot/symbol of the SBFD) from the BS.

The start symbol means the location of the first symbol at which an indicated SBFD time resource starts based on a start position of the time resource period of the TDD configuration (e.g., a slot with index 0). To indicate this start symbol, the BS may indicate to the UE the location of the start slot and the location of the start symbol within the start slot. In this case, the UE may determine a slot after the index of the indicated start slot based on a slot of index 0 as a start slot, and may determine a symbol after the indicated symbol index based on a symbol of index 0 in the start slot as the start symbol. The symbol indicated by the location of the start symbol may be determined as the first symbol of the SBFD time duration.

For example, the UE may be indicated with a slot index and a symbol index indicating a start position of the SBFD time duration from the configuration information. The UE may specify a slot having the indicated slot index as a start slot of the SBFD based on a start slot of the time resource period in which the slot index is 0, and may specify a symbol having the indicated symbol index within the start slot of the SBFD as a start symbol of the SBFD. Alternatively, the UE may receive slot offset and symbol offset information indicating a start position (start slot/start symbol) of the SBFD time duration from the configuration information, and may specify a slot after the slot offset from the start slot of the time resource period as the start slot of the SBFD, and may specify a symbol after the symbol offset from the first symbol of the start slot of the SBFD as the start symbol of the SBFD.

In this case, the UE may determine/specify an end position of the SBFD time duration (i.e., the last symbol/slot of the SBFD time duration) based on the last symbol of the time resource period (or, the last symbol of the UL time duration) even if an end position of the SBFD time duration is not indicated. For example, the UE may determine the SBFD time duration from the start position of the SBFD time duration (i.e., the first symbol/slot of the SBFD time duration) to the last symbol of the DL time duration according to the TDD configuration. In this case, the UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

2) Alt. 2-3-2: When the duration of the SBFD time duration is indicated in a reverse direction of the time resource.

Referring to FIG. 15(b), in Alt. 2-3-2, the UE may be indicated by a duration, which is the length of the SBFD time duration.

In Alt. 2-3-2, the duration may be defined as the amount of time resources or the number of consecutive time resources constituting the SBFD time duration based on the last position of the SBFD time duration (or, the last symbol/slot of the SBFD time duration).

In this case, even without a separate indication, the UE may determine a time duration that is temporally backward by the indicated duration based on the last symbol of the time resource period configured by the TDD configuration (or the last symbol of the UL time duration) as the SBFD time duration, based on the last position of the SBFD time duration (or the last symbol/slot of the SBFD time duration) without a separate indication.

Here, the duration may be indicated by the number of slots of the duration and the number of duration symbols, or by the number of consecutive symbols (or the number of consecutive slots). For example, the duration may be indicated by the number of slots of the duration and the number of duration symbols. Alternatively, the duration may be indicated by the number of slots and the number of symbols. In this case, the UE may determine the duration of the SBFD time duration as the 'number of slots' * 'number of OFDM symbols constituting the slot' + 'number of symbols'.

As such, the UE may determine the determined/specified SBFD time duration as a interval in which the BS performs the SBFD operation based on the indication of the duration of the SBFD time duration and the last symbol of the time resource period (or the last symbol of the UL time duration) according to the TDD configuration, and determine the remaining time durations or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

2) Alt. 2-3-3: When indicated to the first transition point

Referring to FIG. 15(c), in Alt. 2-3-3, the UE may be indicated by the BS to one transition point for the SBFD time duration as the first transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

As illustrated in FIG. 15(c), when the first transition point is indicated, the UE may determine/specify the consecutive symbols from the first transition point (i.e., as the start symbol of the SBFD time duration) to the last symbol of the time resource period (or the last symbol of UL according to the TDD configuration) as the SBFD time duration. In this case, the UE may determine the specified/determined SBFD time duration as a time duration for SBFD operation of the BS, and may determine a time duration excluding the SBFD time duration from the time resource period as a time duration for HD or TDD operation of the BS. In this case, it may be advantageous in that usage of an RRC resource may be reduced compared to when indicated (Alt 1-1 to Alt 1-3) regardless of a non-SBFD configuration.

3. Indication of SBFD time duration in case of DL-Flexible-UL

Section "3" describes a case in which a flexible time duration (flexible slot/symbol) is defined by TDD-UL-DL-ConfigCommon. As such, when a flexible time duration is defined, a non-SBFD time resource according to the TDD configuration may be configured in the order of DL-flexible-UL. When the SBFD time duration is defined within the time resource period, a total of seven cases may be defined as SBFD - DL - Flexible - UL, DL - SBFD - DL - Flexible - UL, DL - SBFD - Flexible - UL, DL - Flexible - SBFD - Flexible - UL, DL - Flexible - SBFD - UL, DL - Flexible - UL - SBFD - UL, and DL - Flexible - UL - SBFD. From among the seven cases, there are four cases in which a boundary of a DL time duration, a UL time duration, or a flexible time duration may be used as a reference for specifying a SBFD time duration: SBFD-DL-Flexible-UL, DL - SBFD - Flexible - UL, DL - Flexible - SBFD - UL, and DL - Flexible - UL - SBFD. Hereinafter, the description focuses on the four cases described above, but when a time resource period includes a flexible time duration, the proposed methods may be applied to various cases other than the four cases described above.

(1) When defined as SBFD - DL - Flexible - UL within the time resource period

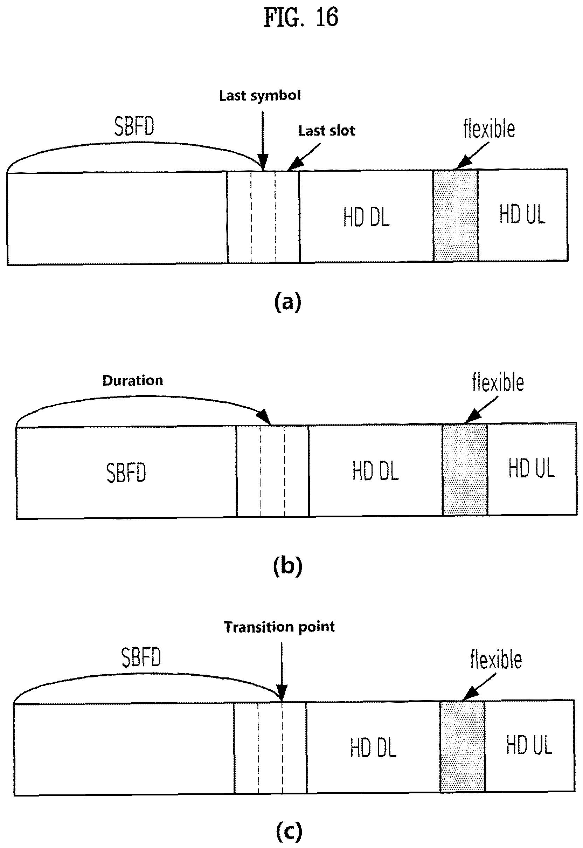

FIG. 16 is a diagram illustrating a method of indicating an SBFD time duration within a time resource period including a flexible time duration.

Referring to FIG. 16, the BS may configure/indicate the SBFD time duration within the DL time duration. Hereinafter, various alternatives for defining SBFD - DL - flexible - UL by having a BS indicate the SBFD time duration within the DL time duration will be described in detail.

1) Alt. 3-1-1: When the last slot/symbol of the SBFD time duration is indicated

Referring to FIG. 16(a), in Alt. 3-1-1, the UE may be indicated by a last location (location of last symbol/slot) of the SBFD time duration from the BS.

The last symbol means the location of the last symbol of the SBFD time duration indicated based on the end/last location of the time resource period of the TDD configuration. The last symbol may be determined/specified by indication of the location of the last slot and the location of the last symbol within the last slot.

Alternatively, the UE may receive slot offset and symbol offset information indicating a last position (last slot/last symbol) of the SBFD time duration from the configuration information, and may specify a slot before the slot offset from the last slot of the time resource period as the last slot of the SBFD, and may specify a symbol before the symbol offset from the first symbol of the last slot of the SBFD as the last symbol of the SBFD. Alternatively, the UE may be indicated with a slot index and a symbol index indicating a last position of the SBFD time duration from the configuration information. The UE may specify a slot having the indicated slot index as a last slot of the SBFD based on a first slot of the time resource period in which the slot index is 0, and may specify a symbol having the indicated symbol index within the last slot of the SBFD as a last symbol of the SBFD.

In this case, the UE may determine that a time from a start slot/symbol (slot with slot index 0 and/or symbol with symbol index 0) of the time resource period to a last location of the indicated SBFD time duration (the last slot/symbol of the SBFD time duration) is the time duration in which the BS or cell performs the SBFD operation, when the last location of the SBFD time duration is indicated, and may determine/specify the remaining time duration as a time duration in which the BS or cell performs the HD or TDD operation. In this case, it may be advantageous in that usage of an RRC resource may be reduced compared to when indicated (Alt 1-1 to Alt 1-3) regardless of a non-SBFD configuration.

2) Alt. 3-1-2: Indication of duration of SBFD time duration

Referring to FIG. 16(b), in Alt. 3-1-2, the UE may be indicated by a duration, which is the length of the SBFD time duration.

The duration may be defined as the amount of time resources or the number of consecutive time resources constituting the SBFD time duration based on a start position of the SBFD time duration. As a first example, the duration may be indicated by the number of slots in the duration and the number of duration symbols. In this case, the UE may determine the symbols corresponding to the number of duration symbols in slots corresponding to the number of duration slots from the start slot of the SBFD and the slots subsequent to the number of duration slots as the duration of the SBFD time duration. Alternatively, the UE may determine a slot following the indicated slot index based on the start slot of index 0 as the slot indicated by the duration, and may determine a symbol following the indicated symbol index based on a slot of index 0 in the slot as the symbol indicated by the duration.

As a second example, the duration may be indicated by the number of configured slots and the number of symbols. In this case, the UE may determine a length of the duration of the SBFD time duration as the 'number of slots' * 'number of OFDM symbols constituting the slot' + 'number of symbols'.

As such, when the duration is indicated, the UE may determine a time duration from a start position of the time resource period (a start symbol of the time resource period, the slot/symbol with index 0) to the length of the duration as an SBFD time duration during which the BS performs an SBFD operation, and may determine the remaining time duration or remaining time resource excluding the indicated SBFD time duration from the time resource period as a time duration during which the BS performs an HD or TDD operation. In this case, it may be advantageous in that usage of an RRC resource may be reduced compared to when indicated (Alt 1-1 to Alt 1-3) regardless of a non-SBFD configuration.

2) Alt. 3-1-3: When one transition point is indicated as the last transition point.

Referring to FIG. 16(c), in the case of Alt 2-1-3, the UE may be indicated by the BS to one transition point for the SBFD time duration as a last transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

In Alt 3-1-3, the UE may be indicated by one transition point for the second transition point, and may specify/determine the SBFD time duration by using the one transition point. The transition point in the second case is a transition point between an SBFD symbol and a non-SBFD symbol, and thus a symbol immediately before the transition point may be determined as the last symbol of the SBFD operation.

In this case, the UE may determine/specify continuous time resources from a start (slot/symbol with index 0) of the time resource period to a last symbol of SBFD indicated by the one time resource period as the SBFD time duration during which the BS performs the SBFD operation, and may determine the remaining time durations or remaining time resources excluding the indicated SBFD time duration in the time resource period as the time duration during which the BS performs the HD or TDD operation. In this case, it may be advantageous in that usage of an RRC resource may be reduced compared to when indicated (Alt 1-1 to Alt 1-3) regardless of a non-SBFD configuration.

(2) Within the time resource period, DL - SBFD - Flexible - UL (or, defined as DL - Flexible - SBFD - UL)

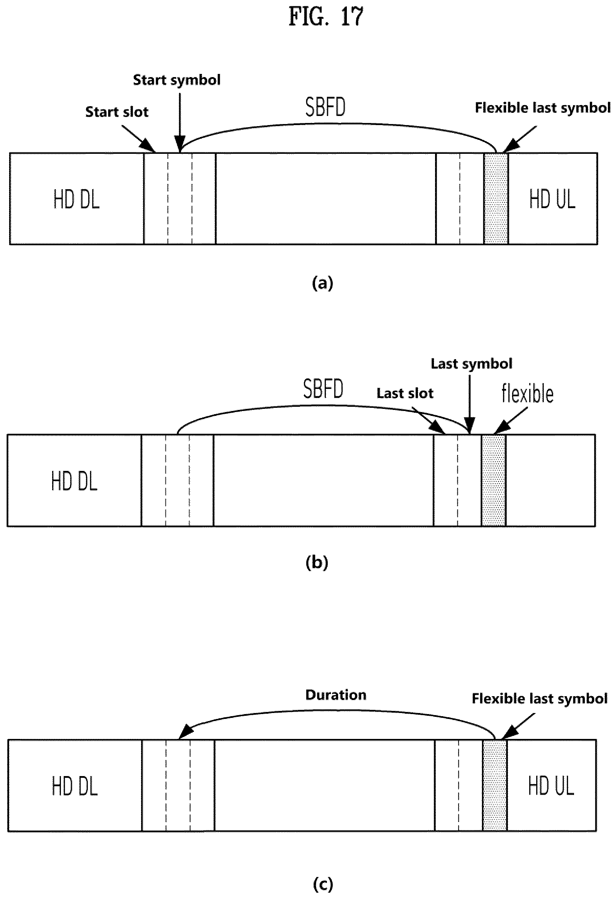

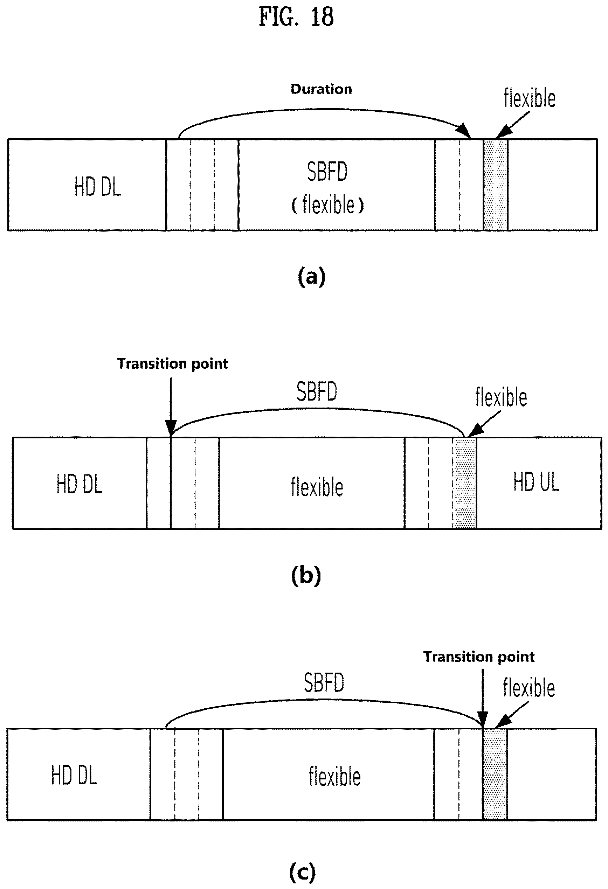

FIGS. 17 and 18 are diagrams for explaining a method of configuring an SBFD time duration based on a boundary of a flexible interval.

Hereinafter, various alternatives for a BS to indicate/configure a SBFD time duration considering (or within) a flexible time duration will be described in detail.

1) Alt. 3-2-1: When only a start slot/symbol of the SBFD time duration is indicated

Referring to FIG. 17(a), in Alt. 3-2-1, the UE may only be indicated by a start position of the SBFD time duration (start slot/symbol of the SBFD) from the BS.

The start symbol means the location of the first symbol at which an indicated SBFD time resource starts based on a start position of the time resource period of the TDD configuration (e.g., a slot with index 0). To indicate this start symbol, the BS may indicate to the UE the location of the start slot and the location of the start symbol within the start slot. In this case, the UE may determine a slot after the index of the indicated start slot based on a slot of index 0 as a start slot, and may determine a symbol after the indicated symbol index based on a symbol of index 0 in the start slot as the start symbol. The symbol indicated by the location of the start symbol may be determined as the first symbol of the SBFD time duration.

For example, the UE may be indicated with a slot index and a symbol index indicating a start position of the SBFD time duration from the configuration information. The UE may specify a slot having the indicated slot index as a start slot of the SBFD based on a start slot of the time resource period in which the slot index is 0, and may specify a symbol having the indicated symbol index within the start slot of the SBFD as a start symbol of the SBFD. Alternatively, the UE may receive slot offset and symbol offset information indicating a start position (start slot/start symbol) of the SBFD time duration from the configuration information, and may specify a slot after the slot offset from the start slot of the time resource period as the start slot of the SBFD, and may specify a symbol after the symbol offset from the first symbol of the start slot of the SBFD as the start symbol of the SBFD.

In this case, the UE may determine/specify an end position of the SBFD time duration (i.e., the last symbol/slot of the SBFD time duration) based on the last symbol of the flexible interval configured in the time resource period (e.g., the time duration of slots not configured as UL time duration and DL time duration in TDD configuration) even if the end position of the SBFD time duration is not indicated. For example, the UE may determine the SBFD time duration as a time from a start position of the SBFD time duration (i.e., a first symbol/slot of the SBFD time duration) to the last symbol of the flexible interval. In this case, the UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

2) Alt. 3-2-2: When only the last slot/symbol of the SBFD time duration is indicated.

Referring to FIG. 17(b), in Alt. 3-2-2, the UE may only be indicated by an end position of the SBFD time duration (last slot/symbol of the SBFD) from the BS.

The last symbol means the location of the last symbol of the SBFD time duration indicated based on the end/last location of the time resource period of the TDD configuration. The last symbol may be determined/specified by indication of the location of the last slot and the location of the last symbol within the last slot.

Alternatively, the UE may receive slot offset and symbol offset information indicating a last position (last slot/last symbol) of the SBFD time duration from the configuration information, and may specify a slot before the slot offset from the last slot of the time resource period as the last slot of the SBFD, and may specify a symbol before the symbol offset from the first symbol of the last slot of the SBFD as the last symbol of the SBFD. Alternatively, the UE may be indicated with a slot index and a symbol index indicating a last position of the SBFD time duration from the configuration information. The UE may specify a slot having the indicated slot index as a last slot of the SBFD based on a first slot of the time resource period in which the slot index is 0, and may specify a symbol having the indicated symbol index within the last slot of the SBFD as a last symbol of the SBFD.

In this case, the UE may determine/specify the SBFD time duration from a start slot/symbol of a flexible interval to the last symbol of the indicated SBFD time duration within the time resource period. The UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

3) Alt. 3-2-3: When the duration of the SBFD time duration is indicated in a reverse direction of the time resource.

Referring to FIG. 17(c), in Alt. 3-2-3, the UE may be indicated by a duration, which is the length of the SBFD time duration.

In Alt. 3-2-3, the duration may be defined as the amount of time resources or the number of consecutive time resources constituting the SBFD time duration based on the last position of the SBFD time duration (or, the last symbol/slot of the SBFD time duration).

In this case, even without a separate indication, the UE may determine the time duration that is temporally backward by the indicated duration based on the last symbol of the flexible interval configured by the TDD configuration as the SBFD time duration, based on the last position of the SBFD time duration (or the last symbol/slot of the SBFD time duration).

Here, the duration may be indicated by the number of slots of the duration and the number of duration symbols, or by the number of consecutive symbols (or the number of consecutive slots). For example, the duration may be indicated by the number of slots of the duration and the number of duration symbols. Alternatively, the duration may be indicated by the number of slots and the number of symbols. In this case, the UE may determine the duration of the SBFD time duration as the 'number of slots' * 'number of OFDM symbols constituting the slot' + 'number of symbols'.

As such, the UE may determines the determined/specified SBFD time duration as a interval in which the BS performs the SBFD operation based on the indication of the duration of the SBFD time duration and the last symbol of the flexible interval configured in the time resource period, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

4) Alt. 3-2-4: When the duration of the SBFD time duration is indicated in a forward direction of the time resource.

Referring to FIG. 18(a), in Alt. 3-2-4, the UE may be indicated by a duration, which is the length of the SBFD time duration.

In Alt. 3-2-4, the duration may be defined as the amount of time resources or the number of consecutive time resources constituting the SBFD time duration based on the start position of the SBFD time duration (or, the start symbol/slot of the SBFD time duration).

In this case, even without a separate indication, the UE may determine the time duration in a forward direction for the indicated duration based on a first symbol of a first slot of a flexible interval (or the last symbol of the DL time duration) to the SBFD time duration as a start position of the SBFD time duration (or the start symbol/slot of the SBFD time duration).

Here, the duration may be indicated by the number of slots of the duration and the number of duration symbols, or by the number of consecutive symbols (or the number of consecutive slots). For example, the duration may be indicated by the number of slots of the duration and the number of duration symbols. Alternatively, the duration may be indicated by the number of slots and the number of symbols. In this case, the UE may determine the duration of the SBFD time duration as the 'number of slots' * 'number of OFDM symbols constituting the slot' + 'number of symbols'.

As such, the UE may determine the determined/specified SBFD time duration as a interval in which the BS performs the SBFD operation based on the indication of the duration of the SBFD time duration and the first symbol of the first slot of the flexible interval (or the last symbol of the DL time duration) according to the TDD configuration, and determine the remaining time durations or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

5) Alt. 3-2-5: When indicated to the first transition point

Referring to FIG. 18(b), in the case of Alt 3-2-5, the UE may be indicated by the BS to one transition point for the SBFD time duration as a first transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

As illustrated in FIG. 18(b), when the first transition point is indicated, the UE may determine/specify the consecutive symbols from the first transition point (i.e., as the start symbol of the SBFD time duration) to the last symbol of the flexible interval (or to the symbol immediately before the start symbol of the UL time duration) as the SBFD time duration. In this case, the UE may determine the specified/determined SBFD time duration as a time duration for SBFD operation of the BS, and may determine a time duration excluding the SBFD time duration from the time resource period as a time duration for HD or TDD operation of the BS. In this case, it may be advantageous in that usage of an RRC resource may be reduced compared to when indicated (Alt 1-1 to Alt 1-3) regardless of a non-SBFD configuration.

6) Alt. 3-2-6: When indicated to the second transition point

Referring to FIG. 18(c), in the case of Alt 3-2-6, the UE may be indicated by the BS to one transition point for the SBFD time duration as a second transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

As illustrated in FIG. 18(c), when a second transition point is indicated, the UE may determine/specify the SBFD time duration from the start symbol of the flexible interval to the second transition point. In this case, the UE may determine the specified/determined SBFD time duration as a time duration for SBFD operation of the BS, and may determine a time duration excluding the SBFD time duration from the time resource period as a time duration for HD or TDD operation of the BS. In this case, it may be advantageous in that usage of an RRC resource may be reduced compared to when indicated (Alt 1-1 to Alt 1-3) regardless of a non-SBFD configuration.

(3) When defined as DL-Flexible-SBFD-UL within the time resource period

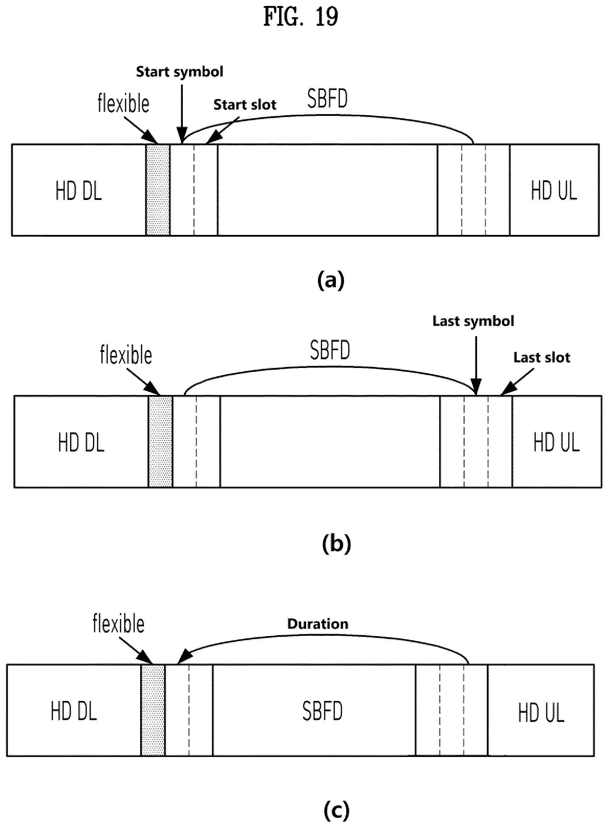

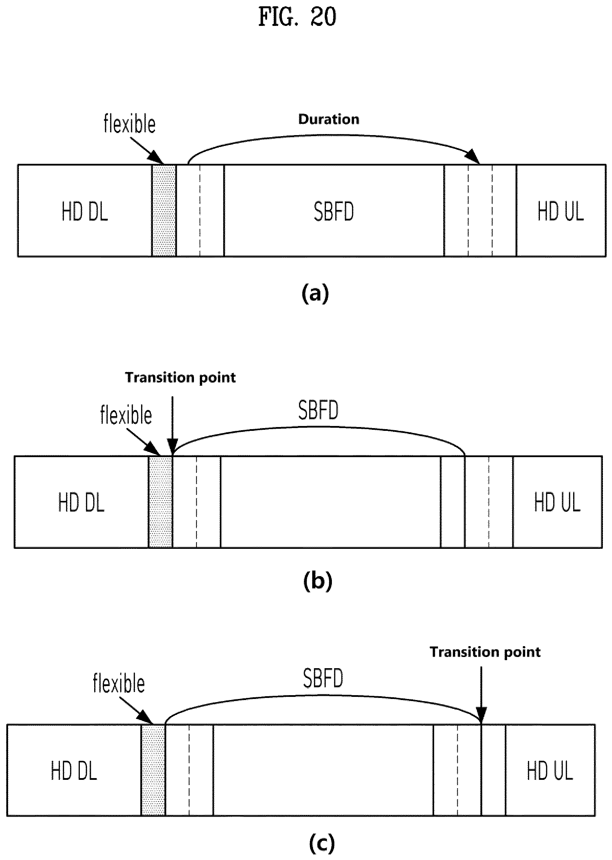

FIGS. 19 and 20 are diagrams for explaining a method of configuring/indicating an SBFD time duration based on a boundary of a UL time duration.

1) Alt. 3-3-1: When only a start slot/symbol of the SBFD time duration is indicated

Referring to FIG. 19(a), in Alt. 3-3-1, the UE may only be indicated by a start position of the SBFD time duration (start slot/symbol of the SBFD) from the BS.

The start symbol means the location of the first symbol at which an indicated SBFD time resource starts based on a start position of the time resource period of the TDD configuration (e.g., a slot with index 0). To indicate this start symbol, the BS may indicate to the UE the location of the start slot and the location of the start symbol within the start slot. In this case, the UE may determine a slot after the index of the indicated start slot based on a slot of index 0 as a start slot, and may determine a symbol after the indicated symbol index based on a symbol of index 0 in the start slot as the start symbol. The symbol indicated by the location of the start symbol may be determined as the first symbol of the SBFD time duration.

For example, the UE may be indicated with a slot index and a symbol index indicating a start position of the SBFD time duration from the configuration information. The UE may specify a slot having the indicated slot index as a start slot of the SBFD based on a start slot of the time resource period in which the slot index is 0, and may specify a symbol having the indicated symbol index within the start slot of the SBFD as a start symbol of the SBFD. Alternatively, the UE may receive slot offset and symbol offset information indicating a start position (start slot/start symbol) of the SBFD time duration from the configuration information, and may specify a slot after the slot offset from the start slot of the time resource period as the start slot of the SBFD, and may specify a symbol after the symbol offset from the first symbol of the start slot of the SBFD as the start symbol of the SBFD.

In this case, the UE may determine/specify an end position of the SBFD time duration (i.e., the last symbol/slot of the SBFD time duration) based on the start symbol of the UL time resource period even if an end position of the SBFD time duration is not indicated. For example, the UE may determine continuous time resources from the start position of the SBFD time duration (i.e., the first symbol/slot of the SBFD time duration) to the start symbol of the UL time duration configured according to the TDD. In this case, the UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

2) Alt. 3-3-2: When only the last slot/symbol of the SBFD time duration is indicated.

Referring to FIG. 19(b), in Alt. 3-3-2, the UE may only be indicated by an end position of the SBFD time duration (last slot/symbol of the SBFD) from the BS.

The last symbol means the location of the last symbol of the SBFD time duration indicated based on the end/last location of the time resource period of the TDD configuration. The last symbol may be determined/specified by indication of the location of the last slot and the location of the last symbol within the last slot.

Alternatively, the UE may receive slot offset and symbol offset information indicating a last position (last slot/last symbol) of the SBFD time duration from the configuration information, and may specify a slot before the slot offset from the last slot of the time resource period as the last slot of the SBFD, and may specify a symbol before the symbol offset from the first symbol of the last slot of the SBFD as the last symbol of the SBFD. Alternatively, the UE may be indicated with a slot index and a symbol index indicating a last position of the SBFD time duration from the configuration information. The UE may specify a slot having the indicated slot index as a last slot of the SBFD based on a first slot of the time resource period in which the slot index is 0, and may specify a symbol having the indicated symbol index within the last slot of the SBFD as a last symbol of the SBFD.

In this case, the UE may determine/specify the SBFD time duration from a start slot/symbol of a flexible interval to the last symbol of the indicated SBFD time duration within the time resource period. The UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

3) Alt. 3-3-3: When the duration of the SBFD time duration is indicated in a reverse direction of the time resource.

Referring to FIG. 19(c), in Alt. 3-3-3, the UE may be indicated by a duration, which is the length of the SBFD time duration.

In Alt. 3-2-3, the duration may be defined as the amount of time resources or the number of consecutive time resources constituting the SBFD time duration based on the last position of the SBFD time duration (or, the last symbol/slot of the SBFD time duration).

In this case, even without a separate indication, the UE may determine the time duration that is temporally backward by the indicated duration based on the start symbol of the UL time duration configured by the TDD configuration as the SBFD time duration, based on the last position of the SBFD time duration (or the last symbol/slot of the SBFD time duration). That is, the UE may determine/specify the SBFD time duration including consecutive symbols corresponding to the duration starting from the symbol immediately before the start symbol of the UL time duration.

As such, the UE may specify/determine the SBFD time duration including a number of consecutive symbols indicated by the duration up to the symbol immediately before the start symbol of the UL time duration, and may determine the SBFD time duration as a interval in which the BS performs the SBFD operation. The UE may determine the remaining time duration or remaining time resources excluding the indicated SBFD time duration in the time resource period as a time duration in which the BS performs HD or TDD operation. In this case, it may be advantageous in that usage of an RRC resource may be reduced compared to when indicated (Alt 1-1 to Alt 1-3) regardless of a non-SBFD configuration.

4) Alt. 3-3-4: When the duration of the SBFD time duration is indicated in a forward direction of the time resource.

Referring to FIG. 20(a), in Alt. 3-3-4, the UE may be indicated by a duration, which is the length of the SBFD time duration.

In Alt. 3-3-4, the duration may be defined as the amount of time resources or the number of consecutive time resources constituting the SBFD time duration based on the start position of the SBFD time duration (or, the start symbol/slot of the SBFD time duration).

In this case, even without a separate indication, the UE may determine the time duration in a forward direction for the indicated duration from a first symbol of a first slot of a flexible interval (or the last symbol of the DL time duration) to the SBFD time duration as a start position of the SBFD time duration (or the start symbol/slot of the SBFD time duration).

As such, the UE may determine an SBFD time duration including consecutive symbols/slots according to the duration of the SBFD time duration from a start symbol of the flexible time duration (or, the symbol immediately after the last symbol of the DL time duration). The UE may determine the determined/specified SBFD time duration as a period in which the BS performs the SBFD operation, and determine the remaining time duration or remaining time resources excluding the indicated SBFD time duration in the time resource period as a time duration in which the BS performs the HD or TDD operation. In this case, it may be advantageous in that usage of an RRC resource may be reduced compared to when indicated (Alt 1-1 to Alt 1-3) regardless of a non-SBFD configuration.

5) Alt. 3-3-5: When indicated to the first transition point

Referring to FIG. 20(b), in the case of Alt 3-2-5, the UE may be indicated by the BS to one transition point for the SBFD time duration as a first transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

As illustrated in FIG. 20(b), when the first transition point is indicated, the UE may determine/specify the consecutive symbols from the first transition point (i.e., as the start symbol of the SBFD time duration) to the last symbol of the flexible interval (or to the symbol immediately before the start symbol of the UL time duration) as the SBFD time duration. In this case, the UE may determine the specified/determined SBFD time duration as a time duration for SBFD operation of the BS, and may determine a time duration excluding the SBFD time duration from the time resource period as a time duration for HD or TDD operation of the BS. In this case, it may be advantageous in that usage of an RRC resource may be reduced compared to when indicated (Alt 1-1 to Alt 1-3) regardless of a non-SBFD configuration.

6) Alt. 3-3-6: When indicated to the second transition point

Referring to FIG. 20(c), in the case of Alt 3-2-6, the UE may be indicated by the BS to one transition point for the SBFD time duration as a first transition point.

The transition point may be defined as two transition points. The first transition point may be a point between two symbols transitioning from a non-SBFD symbol (i.e., a symbol in HD time duration) to an SBFD symbol (i.e., a symbol in SBFD time duration). The second transition point may be a point between the two symbols in which the SBFD symbol transitions to a non-SBFD symbol.

As illustrated in FIG. 20(c), when a second transition point is indicated, the UE may determine/specify the SBFD time duration from the start symbol of the flexible interval to the second transition point. In this case, the UE may determine the specified/determined SBFD time duration as a time duration for SBFD operation of the BS, and may determine a time duration excluding the SBFD time duration from the time resource period as a time duration for HD or TDD operation of the BS. In this case, it may be advantageous in that usage of an RRC resource may be reduced compared to when indicated (Alt 1-1 to Alt 1-3) regardless of a non-SBFD configuration.

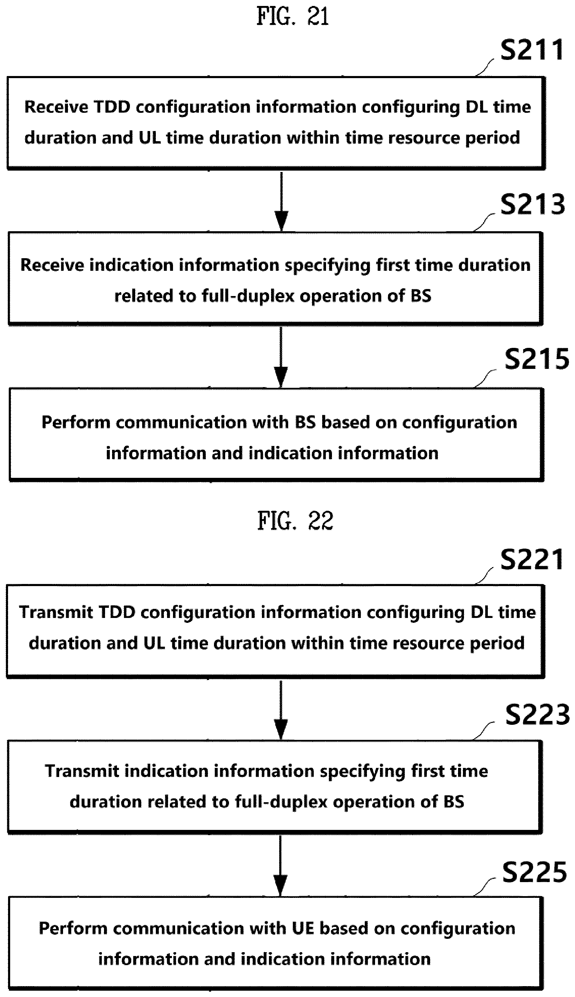

FIG. 21 is a diagram for explaining a method for a UE to specify a first time duration within a time resource period based on indication information.

Referring to FIG. 21, the UE may receive time division duplexing (TDD) configuration information that configures a DL time duration and a UL time duration within a time resource period (S211). The TDD configuration information may include information for configuring a flexible time duration within the time resource period. Alternatively, the UE may determine the remaining time duration not configured as the DL time duration and the UL time duration by the TDD configuration information as the flexible time duration. For example, the TDD configuration information may configure a time duration in the order of DL-DL-DL-UL within the time resource period, and each DL time duration and UL time duration may be configured in slot and symbol units as described in Table 5.

Then, the UE may receive indication information specifying a first time duration related to a full-duplex operation of the BS within the time resource period (S213). As described above, a frequency band for the first time duration includes a first sub-band for DL and a second sub-band for UL, and the BS may perform a full-duplex operation in which a DL transmission operation through the first sub-band and a UL reception operation through the second sub-band are simultaneously performed within the first time duration. The first sub-band and the second sub-band may be configured to be adjacent without overlapping each other (SBFD), or may be configured to partially/completely overlap each other (SFFD and SSFD). As described above, within the first time duration, the UE may only perform a half-duplex operation, performing either a UL transmission operation or a DL reception operation.

The indication information may include at least one of a start position (or a start symbol/slot), an end position (or a last symbol/slot), and a duration (information about the number or length of consecutive symbols/slots) for specifying the first time duration, which is the SBFD time duration, as described with reference to FIGS. 11 to 20. The first time duration may be configured by considering at least one of the DL time duration, the flexible time duration, and the UL time duration configured by the TDD configuration. For example, the first time duration may be configured by considering a boundary of at least one of the DL time duration, the UL time duration, and the flexible time duration. For example, when the first time duration is configured only within the DL time duration, the first time duration may be specified/indicated by considering the start position of the UL time duration or the start position of the DL time duration.

Alternatively, the indication information may include only information on one of a start position (or a start symbol/slot), an end position (or a last symbol/slot), and a duration (information on the number or length of consecutive symbols/slots) for specifying the first time duration, which is the SBFD time duration. In this case, the first time duration may be specified by additionally using a boundary of one of the DL time duration and the UL time duration in addition to the indication information.

In detail, based on that the indication information indicates only a start symbol of the first time duration, the UE may determine the start symbol included in the indication information as the start symbol of the first time duration, and may specify the symbol immediately before the start symbol of the UL time duration, which is a boundary of the UL time duration, as the last symbol of the first time duration. Alternatively, based on that the indication information indicates only the last symbol of the first time duration, the UE may determine the last symbol included in the indication information as the last symbol of the first time duration, and specify the start symbol of the DL time duration, which is a boundary of the DL time duration, as the start symbol of the first time duration. That is, the UE may expect/determine that the start symbol or the last symbol of the first time duration will be specified based on the boundary of the DL time duration or the UL time duration when the indication information indicates only one of the start or the end of the first time duration. Alternatively, based on the indication information indicating only the duration, the UE may consider the symbol immediately before the start symbol of the start interval of the UL time duration as indicated as the last symbol of the first time duration, and specify/determine the first time duration having symbols/slots corresponding to the number of slots/symbols indicated by the duration from the last symbol of the first time duration. In this case, the first time duration may be configured/indicated within the DL time duration.

Alternatively, the UE may determine whether the transition point is the first transition point or the second transition point described above when the indication information includes information about only one transition point. In detail, the UE may determine whether the transition point is the first transition point or the second transition point based on which position the one transition point indicates from among the DL time durations. For example, the indication information may contain information about only one transition point. In this case, the UE may determine that the transition point is the second transition point when the transition point has a time duration less than a preset threshold interval from the start symbol of the UL time duration. In this case, the UE may determine that the transition point indicated through the indication information indicates the position of the last symbol of the first time duration, and may specify the start symbol of the DL time duration as the start symbol of the first time duration. Alternatively, the UE may determine that the transition point is the first transition point when the transition point has a time duration greater than or equal to a preset threshold interval from the start symbol of the UL time duration. In this case, the UE may determine that the transition point indicated through the indication information indicates the position of the start symbol of the first time duration, and may specify the last symbol of the DL time duration or the symbol immediately before the start symbol of the UL time duration as the last symbol of the first time duration. The preset threshold interval may be determined based on a middle position of the DL time duration.

Alternatively, based on the flexible time duration being further included in the time resource period, the UE may receive the indication information indicating one of the symbols included in the flexible time duration as the start symbol of the first time duration or the last symbol of the first time duration. In this case, as described with reference to FIGS. 16 to 20, the first time duration may be configured/indicated by considering at least one of a boundary of the flexible time duration and the boundary of the UL time duration.

The UE may specify a first time duration specified by the indication information and a second time duration which is a remaining time duration excluding the first time duration in the time resource period. The UE may expect/determine that the BS will perform a full-duplex operation in the first time duration, and may expect/determine that the BS will perform a half-duplex operation in the second time duration.

Then, the UE may communicate with the BS based on the configuration information and the indication information (S215). As described above, the first time duration specified by the indication information is an interval in which a full-duplex operation is performed only at the BS, and the UE may perform only a half-duplex operation in the first time duration similarly to the second time duration. However, as described above, in the case of the first time duration, interference such as CLI may occur significantly due to the full-duplex operation of the BS, and therefore, the UE may configure some different transmission parameters or reception parameters between the first time duration and the second time duration to alleviate the CLI, or the like. In this case, the UE may need to distinguish between the first time duration and the second time duration for application of distinct parameters between the first time duration and the second time duration.

In detail, the UE may differently determine the transmission power of the UL signal for each of the first time duration and the second time duration. For example, when the UE determines the transmission power of the UL signal based on open loop power control (OLPC), the UE may transmit the UL signal with a higher transmission power for the first time duration than for the second time duration. Alternatively, the UE may be configured with an MCS for each of the first time duration and the second time duration. For example, when the UE transmits a UL signal based on the CG configuration, a first MCS for the first time duration and a second MCS (different from the first MCS) for the second time duration may be configured, respectively. In this case, the UE may transmit the UL signal based on the first MCS when transmission of the UL signal based on the CG configuration is performed in the first time duration, and may transmit the UL signal based on the second MCS when transmission of the UL signal based on the CG configuration is performed in the second time duration. Alternatively, the UE may be preconfigured with a first MCS table related to the first time duration and a second MCS table related to the second time duration, and may determine a corresponding MCS based on a distinction between the first time duration and the second time duration.

Alternatively, the UE may repeatedly transmit the DMRS bundled UL signal. In this case, the UE may not perform DMRS bundling during the first time duration and the second time duration. For example, the UE may receive an indication related to DMRS bundling from a BS and repeatedly transmit a DMRS bundled UL signal based on a configured nominal time domain window (TDW). In this case, when the actual TDW is configured over the first time duration and the second time duration, the UE may determine/consider that the actual TDW ends at a boundary of the first time duration and the second time duration and perform the DMRS bundling. This is because, as described above, in the first time duration, UL signals and DL signals may be simultaneously transmitted and received in two adjacent frequency bands (UL sub-band and DL sub-band), and due to transmission and reception of the two signals, significant interference (CLI) occurs in the first time duration, and thus a channel environments of the second time duration and the first time duration may be different.

FIG. 22 is a diagram for explaining a method of transmitting indication information specifying a first time duration within a time resource period by a BS.

Referring to FIG. 22, the BS may transmit, to the UE, time division duplexing (TDD) configuration information that configures a DL time duration and a UL time duration within a time resource period (S221). The TDD configuration information may include information for configuring a flexible time duration within the time resource period. Alternatively, the UE may determine the remaining time duration not configured as the DL time duration and the UL time duration by the TDD configuration information as the flexible time duration. For example, the TDD configuration information may configure a time duration in the order of DL-DL-DL-UL within the time resource period, and each DL time duration and UL time duration may be configured in slot and symbol units as described in Table 5.

Then, the BS may transmit indication information specifying a first time duration related to a full-duplex operation of the BS within the time resource period (S223). As described above, a frequency band for the first time duration includes a first sub-band for DL and a second sub-band for UL, and the BS may perform a full-duplex operation in which a DL transmission operation through the first sub-band and a UL reception operation through the second sub-band are simultaneously performed within the first time duration. The first sub-band and the second sub-band may be configured to be adjacent without overlapping each other (SBFD), or may be configured to partially/completely overlap each other (SFFD and SSFD). As described above, within the first time duration, the UE may only perform a half-duplex operation, performing either a UL transmission operation or a DL reception operation.

Then, the BS may communicate with the UE based on the configuration information and the indication information (S225). As described above, the first time duration specified by the indication information is an interval in which a full-duplex operation is performed only at the BS, and the UE may perform only a half-duplex operation in the first time duration similarly to the second time duration. However, as described above, in the case of the first time duration, interference such as CLI may occur significantly due to the full-duplex operation of the BS, and therefore, the BS may configure some different transmission parameters or reception parameters between the first time duration and the second time duration to alleviate the CLI, or the like. Parameters for transmitting and receiving some different signals are configured between the first time duration and the second time duration as such, and thus the BS needs to transmit the indication information to the UE such that the UE may specify the first time duration within the time resource period.

In detail, the BS may differently configure a transmission parameter for the UL signal between the first time duration and the second time duration. For example, the BS may configure a different transmission power control parameter for the first time duration than for the second time duration. For example, the BS may configure/indicate the UE to a transmission power control parameter for the first time duration such that the transmission power of the UL signal for the first time duration may be determined to be a value greater than that for the second time duration. Alternatively, the BS may configure a different MCS for the first time duration than the MCS for the second time duration. Alternatively, the BS may expect that no DMRS bundled UL signals may be received during the second time duration and the first time duration.

As such, the proposed disclosure may effectively indicate to a UE a first time duration during which a full-duplex operation of a BS is performed in a time resource period based on a TDD configuration, through indication information about the first time duration during which a channel environment may be different from among the time resource periods. By configuring the first time duration based on a boundary of a DL time duration or a UL time duration, the amount of information required for the indication information to specify the first time duration may be minimized. By minimizing the indication information, a load of RRC signaling may be significantly reduced.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

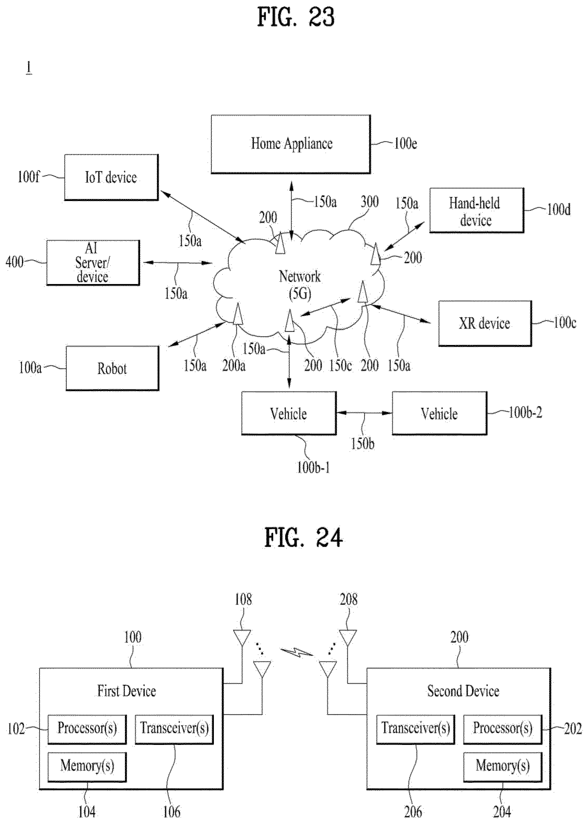

FIG. 23 illustrates a communication system applied to the present disclosure.

Referring to FIG. 23, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 24 illustrates a wireless device applicable to the present disclosure.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 or UE may include a processor 102 and a memory 104 connected to the RF transceiver. The memory 104 may include at least one program for performing an operation related to the embodiments described with reference to FIGS. 9 to 12.

In detail, the processor 102 may control the RF transceiver 106 to receive time division duplexing (TDD) configuration information that configures a DL time duration and a UL time duration within a time resource period, receive indication information that specifies a first time duration related to a full-duplex operation of the BS within the time resource period, perform communication with the BS based on the indication information and the TDD configuration information, and based on the indication information indicating only one of a start symbol, a last symbol, and a duration of the first time duration, the first time duration may be specified by further considering a boundary of one time duration from among the UL time duration and the DL time duration.

Alternatively, a processing device including the processor 102 and the memory 104 may be configured. In this case, the processing device may include at least one processor; and at least one memory connected to the at least one processor and storing instructions, when executed by the at least one processor, cause the UE to receive time division duplexing (TDD) configuration information for configuring a DL time duration and a UL time duration within a time resource period, receive indication information specifying a first time duration related to a full-duplex operation of the BS within the time resource period, and perform communication with the BS based on the indication information and the TDD configuration information, and based on the indication information indicating only one of a start symbol, a last symbol, and a duration of the first time duration, the first time duration may be specified by further considering a boundary of one time duration from among the UL time duration and the DL time duration.

Alternatively, a non-transitory computer-readable storage medium may be configured to record instructions for performing operations for the embodiments described with reference to FIGS. 9 to 20.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the BS may include a processor 202, a memory 204, and/or a transceiver 206. The processor 202 may control the transceiver 206 or the RF transceiver to transmit time division duplexing (TDD) configuration information that configures a DL time duration and a UL time duration within a time resource period, transmit indication information that specifies a first time duration related to a full-duplex operation of the BS in the time duration, perform communication with the UE based on the indication information and the TDD configuration information, and based on the indication information indicating only one of a start symbol, a last symbol, and a duration of the first time duration, the first time duration may be specified by further considering a boundary of one time duration from among the UL time duration and the DL time duration.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present disclosure is applied

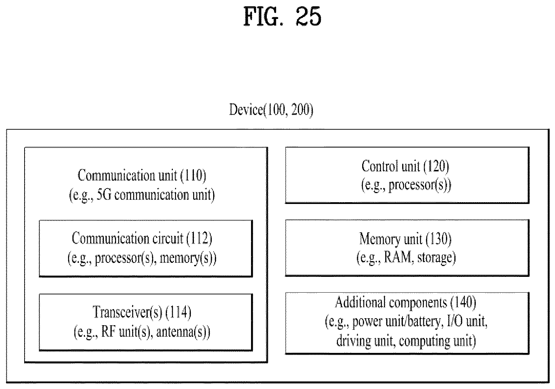

FIG. 25 illustrates another example of a wireless device applied to the present disclosure.

Referring to FIG. 25, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

INDUSTRIAL APPLICABILITY

The embodiments of the present disclosure as described above may be applied to various mobile communication systems.

**Claims**

1. A method of performing communication with a base station (BS) by a user equipment (UE) in a wireless communication system, the method comprising:

   receiving time division duplexing (TDD) configuration information for configuring a downlink (DL) time duration and an uplink (UL) time duration within a time resource period;
   receiving indication information specifying a first time duration related to a full-duplex operation of the BS within the time resource period; and
   performing communication with the BS based on the indication information and the TDD configuration information,
   wherein, based on the indication information indicating only one of a start symbol, a last symbol, and a duration of the first time duration, the UE specifies the first time duration by further considering a boundary of one of the UL time duration and the DL time duration.

2. The method of claim 1, wherein, based on the indication information indicating only a start symbol of the first time duration, the first time duration is specified as a time duration from the start symbol of the first time duration to a symbol immediately before a start symbol of the UL time duration.

3. The method of claim 1, wherein, based on the indication information indicating only a last symbol of the first time duration, the first time duration is specified as a time duration from a start symbol of the DL time duration to the last symbol.

4. The method of claim 1, wherein, based on the indication information indicating only the duration, a last symbol of the first time duration is determined as a symbol immediately before a start symbol of the UL time duration.

5. The method of claim 1, wherein the first time duration is specified only within the DL time duration by the indication information.

6. The method of claim 1, wherein, based on a flexible time duration being further included in the time resource period, the indication information indicates one of symbols included in the flexible time duration as a start symbol of the first time duration or a last symbol of the first time duration.

7. The method of claim 1, wherein a frequency band for the first time duration includes a first sub-band for the UL and a second sub-band for the DL that do not overlap each other.

8. The method of claim 1, wherein a frequency band for the first time duration includes a first sub-band for the UL and a second sub-band for the DL that overlap each other.

9. The method of claim 1, wherein the time resource period is divided into a first time duration in which a full-duplex operation of the BS is performed based on the indication information and a second time duration in which a half-duplex operation of the BS is performed, and
   the first time duration is configured with a different transmission power control parameter than the second time duration.

10. The method of claim 1, wherein the indication information is received from the BS through radio resource control (RRC) signaling.

11. A non-transitory computer-readable storage medium having recorded thereon instructions for performing the method of claim 1.

12. A user equipment (UE) for performing communication with a base station (BS) in a wireless communication system, the UE comprising:

a radio frequency (RF) transceiver; and
a processor connected to the RF transceiver,
wherein the processor controls the RF transceiver to receive time division duplexing (TDD) configuration information for configuring a downlink (DL) time duration and an uplink (UL) time duration within a time resource period, receive indication information specifying a first time duration related to a full-duplex operation of the BS within the time resource period, and perform communication with the BS based on the indication information and the TDD configuration information, and
based on the indication information indicating only one of a start symbol, a last symbol, and a duration of the first time duration, the first time duration is specified by further considering a boundary of one of the UL time duration and the DL time duration.

13. A processing device for controlling a user equipment (UE) for performing communication a base station (BS) in a wireless communication system, the processing device comprising:

at least one processor; and
at least one memory connected to the at least one processor and storing instructions that, when executed by the at least one processor, cause the UE to receive time division duplexing (TDD) configuration information that configures a downlink (DL) time duration and an uplink (UL) time duration within a time resource period, and receive indication information that specifies a first time duration related to a full-duplex operation of the BS within the time resource period, and perform communication with the BS based on the indication information and the TDD configuration information,
wherein, based on the indication information indicating only one of a start symbol, a last symbol, and a duration of the first time duration, the first time duration is specified by further considering a boundary of one of the UL time duration and the DL time duration.

14. A method of performing communication with a user equipment (UE) by a base station (BS) in a wireless communication system, the method comprising:

transmitting time division duplexing (TDD) configuration information for configuring a downlink (DL) time duration and an uplink (UL) time duration within a time resource period;
transmitting indication information specifying a first time duration related to a full-duplex operation of the BS within the time duration; and
performing communication with the UE based on the indication information and the TDD configuration information,
wherein, based on the indication information indicating only one of a start symbol, a last symbol, and a duration of the first time duration, the first time duration is specified by further considering a boundary of one of the UL time duration and the DL time duration.

15. A base station (BS) for receiving an uplink (UL) signal in a wireless communication system, the BS comprising:

a radio frequency (RF) transceiver; and
a processor connected to the RF transceiver,
wherein the processor controls the RF transceiver to transmit time division duplexing (TDD) configuration information for configuring a downlink (DL) time duration and a UL time duration within a time resource period, transmit indication information specifying a first time duration related to a full-duplex operation of the BS in the time duration, and perform communication with the UE based on the indication information and the TDD configuration information, and

based on the indication information indicating only one of a start symbol, a last symbol, and a duration of the first time duration, the first time duration is specified by further considering a boundary of one of the UL time duration and the DL time duration.

# FIG. 1

# FIG. 2

# FIG. 3

# FIG. 4

Resource grid

A carrier
( up to 3300 subcarriers, i.e., 275 RBs )

A BWP

1 RB = 12 subcarriers

1 RE

1 subcarrier

1 symbol

l = 0 ···

k = 0

# FIG. 5

EP 4 598 188 A1

System Information

Initial Cell Search | Reception | Random Access Procedure | General DL/UL Tx/Rx

S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11     S12     S13   S14    S15    S16     S17   • DL/UL ACK/NACK

• UE CQI/PMI/Rank Report
    using PUSCH and PUCCH

FIG. 6

# FIG. 7

UE

BS

CSI Related Configuration
Information (710)

RS(e.g., CSI-RS) (720)

CSI Calculation (730)

CSI Report (740)

# FIG. 8

Carrier #0
Subband-wise Full Duplex

(a)

Carrier #0
Spectrum-Sharing Full Duplex

(b)

# FIG. 9

| HD | SBFD | SBFD | SBFD | HD |

(a)

| HD | SFFD | SFFD | SFFD | HD |

(b)

FIG. 10

(a)

(b)

# FIG. 11

(a)

(b)

(C)

# FIG. 12

(a)

(b)

(c)

# FIG. 13

(a)

(b)

(c)

# FIG. 14

**(a)**

**(b)**

**(c)**

# FIG. 15

(a)

(b)

(c)

# FIG. 16

**(a)**

**(b)**

**(c)**

# FIG. 17

**Start slot**
**Start symbol**
SBFD
**Flexible last symbol**

HD DL | HD UL

(a)

**Last symbol**
SBFD
**Last slot**
flexible

HD DL

(b)

**Duration**
**Flexible last symbol**

HD DL | HD UL

(c)

# FIG. 18

(a)

(b)

(c)

# FIG. 19

**(a)**

**(b)**

**(c)**

# FIG. 20

flexible

**Duration**

| HD DL | | | SBFD | | HD UL |

**(a)**

**Transition point**

flexible

SBFD

| HD DL | | | | | HD UL |

**(b)**

**Transition point**

flexible

SBFD

| HD DL | | | | | HD UL |

**(c)**

## FIG. 21

S211

Receive TDD configuration information configuring DL time duration and UL time duration within time resource period

S213

Receive indication information specifying first time duration related to full-duplex operation of BS

S215

Perform communication with BS based on configuration information and indication information

## FIG. 22

S221

Transmit TDD configuration information configuring DL time duration and UL time duration within time resource period

S223

Transmit indication information specifying first time duration related to full-duplex operation of BS

S225

Perform communication with UE based on configuration information and indication information

# FIG. 23

# FIG. 24

# FIG. 25

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

## INTERNATIONAL SEARCH REPORT

| International application No. |
|---|
| **PCT/KR2023/015168** |

| A. | CLASSIFICATION OF SUBJECT MATTER |
|---|---|

**H04W 72/04**(2009.01)i; **H04L 5/14**(2006.01)i; **H04L 5/00**(2006.01)i; **H04W 72/11**(2023.01)i; **H04W 72/23**(2023.01)i; **H04L 27/26**(2006.01)i

According to International Patent Classification (IPC) or to both national classification and IPC

| B. | FIELDS SEARCHED |
|---|---|

Minimum documentation searched (classification system followed by classification symbols)

H04W 72/04(2009.01); H04L 1/18(2006.01); H04L 5/00(2006.01); H04L 5/14(2006.01); H04W 56/00(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 주기(period), TDD(Time Division Duplexing), 설정(configuration), 전 이중(full-duplex), 시간 구간(time interval), 업링크(uplink), 다운링크(downlink), 심볼(symbol), 경계(boundary)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2022-0255683 A1 (INTERDIGITAL PATENT HOLDINGS, INC.) 11 August 2022 (2022-08-11)<br>See paragraphs [0057]-[0058] and [0097]; and claim 1. | 1-15 |
| Y | US 2022-0078817 A1 (QUALCOMM INCORPORATED) 10 March 2022 (2022-03-10)<br>See paragraphs [0089], [0171] and [0182]. | 1-15 |
| Y | LG ELECTRONICS. Study on Subband non-overlapping full duplex. R1-2207364, 3GPP TSG RAN WG1 #110. Toulouse, France. 12 August 2022.<br>See sections 1 and 2.1-2.3. | 5-7,9 |
| A | ETRI. Discussion on subband non-overlapping full duplex enhancements. R1-2206955, 3GPP TSG RAN WG1 #110. Toulouse, France. 12 August 2022.<br>See sections 1-2.3. | 1-15 |
| A | US 2022-0078734 A1 (QUALCOMM INCORPORATED) 10 March 2022 (2022-03-10)<br>See paragraphs [0074]-[0290]; and figures 1-33. | 1-15 |

☐ Further documents are listed in the continuation of Box C.　　☑ See patent family annex.

| | |
|---|---|
| \*　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **22 January 2024** | **22 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015168**

| Patent document cited in search report | | | Publication date (day/month/year) | Patent family member(s) | | | Publication date (day/month/year) |
|---|---|---|---|---|---|---|---|
| US | 2022-0255683 | A1 | 11 August 2022 | EP | 3114789 | A1 | 11 January 2017 |
| | | | | US | 10033490 | B2 | 24 July 2018 |
| | | | | US | 10541790 | B2 | 21 January 2020 |
| | | | | US | 11323212 | B2 | 03 May 2022 |
| | | | | US | 2017-0019218 | A1 | 19 January 2017 |
| | | | | US | 2018-0302196 | A1 | 18 October 2018 |
| | | | | US | 2020-0153566 | A1 | 14 May 2020 |
| | | | | WO | 2015-134907 | A1 | 11 September 2015 |
| US | 2022-0078817 | A1 | 10 March 2022 | CN | 115918026 | A | 04 April 2023 |
| | | | | EP | 4208988 | A1 | 12 July 2023 |
| | | | | WO | 2022-051117 | A1 | 10 March 2022 |
| US | 2022-0078734 | A1 | 10 March 2022 | CN | 116158133 | A | 23 May 2023 |
| | | | | EP | 4209065 | A1 | 12 July 2023 |
| | | | | WO | 2022-051145 | A1 | 10 March 2022 |

Form PCT/ISA/210 (patent family annex) (July 2022)